(19) Europäisches Patentamt
European Patent Office
Office européen des brevets

(11) **EP 3 260 829 A1**

(12) **EUROPÄISCHE PATENTANMELDUNG**

(43) Veröffentlichungstag:
**27.12.2017 Patentblatt 2017/52**

(51) Int Cl.:
***G01J 9/00*** (2006.01)

(21) Anmeldenummer: **17177531.5**

(22) Anmeldetag: **22.06.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **23.06.2016 DE 102016211310**

(71) Anmelder: **Fraunhofer-Gesellschaft zur Förderung der angewandten Forschung e.V.
80686 München (DE)**

(72) Erfinder:
• **Berlich, René
07745 Jena (DE)**
• **Reinlein, Claudia
07743 Jena (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(54) **VORRICHTUNG ZUR MESSUNG EINER ABERRATION, ABBILDUNGSSYSTEME UND VERFAHREN ZUR MESSUNG EINER ABERRATION**

(57) Eine Vorrichtung zur Messung einer Aberration umfasst einen Bildsensor, eine Projektionsoptik zur optischen Projektion auf den Bildsensor, eine optische Einrichtung zur Beeinflussung der optischen Projektion auf den Bildsensor so, dass auf dem Bildsensor ein Mehrfachbild aus einer Mehrzahl von Teilbildern (26a-d) entsteht, wobei die optische Einrichtung (22) zumindest einen Bereich (74a-d; 82a-d) pro Teilbild (26a-d) aufweist, wobei die Bereiche (74a-d; 82a-d) unterschiedliche laterale Abschnitte einer auf die Projektionsoptik einfallenden Wellenfront (36') unterschiedlich beeinflussen, und eine Auswerteeinrichtung, die ausgebildet ist, um auf Basis des Mehrfachbildes eine Information bezüglich der Aberration zu bestimmen.

Fig. 1

EP 3 260 829 A1

**Beschreibung**

Die vorliegende Erfindung bezieht sich auf eine Vorrichtung zur Messung einer Aberration, auf Abbildungssysteme mit einer solchen Vorrichtung und auf ein Verfahren zur Messung einer Aberration. Die vorliegende Erfindung bezieht sich insbesondere auf Anordnungen und Verfahren zur Messung von Aberrationen mittels optischer Wellenfrontcodierung.

Bei der Ausbreitung von Licht ausgehend von einem Objekt durch die Atmosphäre führen Turbulenzen zu einer räumlichen und zeitlichen Variation des optischen Weges hin zu einem Ziel. Dies führt dazu, dass bei einer passiven Beobachtung des Objektes oder bei einer aktiven Beleuchtung des Objektes mittels eines optischen Systems die Wellenfront deformiert wird, was als das Auftreten von Aberrationen bezeichnet wird. Durch Aberrationen wird die Abbildungsqualität und/oder Beleuchtungsqualität verringert. Die Abbildungsqualität und/oder Beleuchtungsqualität kann über die Höhe des Strehl-Verhältnisses S quantifiziert werden. Dabei entspricht ein Wert von S = 1 einer idealen (beugungsbegrenzten) Abbildung. Mechanische Verformungen, etwa Vibrationen oder gewichtsinduzierte Deformationen, oder thermische Verformungen innerhalb des optischen Systems sowie klassische Aberrationen, wie etwa eine sphärische Aberration, ein Astigmatismus, Koma oder dergleichen, haben einen äquivalenten Einfluss auf die Abbildungs-/Beleuchtungsqualität. Durch aktive optische Elemente, etwa einen Kippspiegel oder deformierbare Spiegel ist es prinzipiell möglich, diesen Einfluss zumindest teilweise zu kompensieren, um die Abbildungs-/Beleuchtungsqualität zu erhöhen bzw. einen Einfluss der Aberrationen der Wellenfront zu verringern. Jedoch kann es hierzu erforderlich sein, die räumliche und zeitliche Verteilung der Wellenfront am Beobachtungs-/Beleuchtungssystem zu messen.

Ansätze zur Wellenfront-/Aberrationsmessung werden beispielsweise in EP 1 983 318 A1 beschrieben. Die Messung der Wellenfront erfolgt mittels eines Shack-Hartmann-Sensors bzw. einer plenoptischen Kamera. Die Aberration der Wellenfront in der Pupille des optischen Systems wird mittels eines Mikrolinsenarrays gemessen. Dabei erzeugt das Mikrolinsenarray mehrere, räumlich voneinander getrennte Abbildungen eines Beobachtungsobjektes. Die relative Lage der mehrfach abgebildeten Objektmerkmale zueinander liefern Informationen über die Wellenfront. Jedoch erfordert dieser Ansatz, dass eine Punktlichtquelle als Beobachtungsobjekt benötigt wird, um die Wellenfront zu messen. Dies ist jedoch in vielen Anwendungsszenarien nicht gegeben. Alternativ kann zwar auch ein ausgedehntes Objekt verwendet werden, jedoch müssen hierzu bestimmte Objektdetails identifiziert werden können, um die Wellenfront nummerisch zu rekonstruieren. Durch die sehr niedrige Auflösung (Objektabtastung) aufgrund der extrem kurzen Brennweite des Mikrolinsenarrays ist die Identifikation jedoch nur sehr eingeschränkt und in vielen Anwendungsszenarien überhaupt nicht möglich.

Ein anderer, in US 4,696,573 A beschriebener Ansatz schlägt die Messung der Wellenfront mittels eines Shearing-Interferometers vor. Hier erfolgt die Beobachtung einer Punktlichtquelle. Interferenzmuster der Wellenfront werden untersucht, um so die Wellenfront und damit die Aberration zu rekonstruieren. Jedoch ist hierfür eine Punktlichtquelle als Objekt/Ziel erforderlich.

Ein anderer, in US 8,907,260 B2 beschriebener Ansatz schlägt die Verwendung einer Autokorrelation vor. Hierzu wird die Objektverteilung zu verschiedenen Zeitpunkten gemessen. Durch eine Autokorrelation der gemessenen Bilder kann eine Tip/Tilt-Aberration gemessen werden. Dieses Konzept weist jedoch den Nachteil, dass mehrere Aufnahmen benötigt werden. Die Aberrationen können nur relativ in Bezug auf eine der Aufnahmen gemessen werden. Da insbesondere atmosphärische Aberrationen einer hohen Wechselrate unterliegen, treten hier Nachteile auf.

Ein anderer, in US 7,268,937 B1 beschriebener Ansatz bezieht sich auf einen holographischen Wellenfrontsensor. Hierbei wird die Überlagerung aus einer Referenzwellenfront mit einer zweiten Wellenfront, die eine bestimmte Aberration, etwa eine Zernike-Mode, repräsentiert als holographisches optisches Element (HOE) aufgenommen. Wenn dieses HOE in den Strahlengang einer zu untersuchenden Wellenfront gebracht wird, wird der Beitrag der Wellenfront, der der gleichen Zernike-Mode der Aufnahme entspricht, in zwei entgegengesetzte Ordnungen gebeugt. Die relative Intensität dieser Beugungsordnungen liefert die Information über die Stärke/Amplituden der Aberration. Dieses Konzept hat den Nachteil, dass eine Punktlichtquelle als Objekt/Ziel benötigt wird. Ferner weist das Konzept den Nachteil auf, dass es nur für ein schmalbandiges Wellenlängenspektrum anwendbar ist.

Ein weiterer, in US 7,554,672 B2 beschriebener Ansatz bezieht sich auf die Berücksichtigung von Phasendiversität und eines gekrümmten Sensors. Das Ziel wird hierbei mit unterschiedlichen Fokuseinstellungen beobachtet oder in unterschiedlichen Beugungsordnungen eines diffraktiven Elementes, wie es beispielsweise in WO 2009/058747 A1, US 7,554,672 B2, WO 2004/113856 A1, US 8,517,535 B2 oder US 7,531,774 B2 beschrieben ist, beobachtet. Aus den unterschiedlichen Bildverteilungen kann die Wellenfrontaberration rekonstruiert werden. Dieses Konzept weist den Nachteil auf, dass entweder mehrere optische Abbildungssysteme und Bildsensoren benötigt werden oder die Bilder zeitlich versetzt aufgenommen werden müssen, was zu einer verringerten Messgeschwindigkeit führt. Ferner weist das Konzept den Nachteil auf, dass für ausgedehnte Objektverteilungen die Rekonstruktion nummerisch sehr aufwendig ist und damit ebenfalls die Messgeschwindigkeit limitiert.

Wünschenswert wäre demnach ein Konzept, das eine Berücksichtigung oder Korrektur von Aberrationen auch für ausgedehnte Objekte mit wenigen Objektdetails mit einer hohen Messgeschwindigkeit ermöglicht.

Die Aufgabe der vorliegenden Erfindung besteht deshalb darin, eine Vorrichtung zur Messung einer Aberration zu schaffen, die Informationen bezüglich der Aberration mit einer hohen Messgeschwindigkeit sowohl für kleine (Punktquellen) als auch für ausgedehnte Objekte liefern können, die nur wenige Details ("Features") aufweisen.

Diese Aufgabe wird durch den Gegenstand der unabhängigen Patentansprüche gelöst.

Der Kerngedanke der vorliegenden Erfindung besteht darin, erkannt zu haben, dass obige Aufgabe dadurch gelöst werden kann, dass eine optische Projektion auf einen Bildsensor durch eine optische Einrichtung so beeinflussbar ist, dass ein Mehrfachbild auf dem Bildsensor entsteht. Das Mehrfachbild liefert Informationen bezüglich der Aberration, die auswertbar sind, so dass basierend auf der Auswertung des Mehrfachbildes und mithin einer ggf. einzelnen Aufnahme die Information bezüglich der Aberration erhalten werden kann, was einen geringen Rechenaufwand erfordert und mithin schnell durchführbar ist. Ferner kann durch Verwendung des Mehrfachbildes auch ein ausgedehntes Objekt als Quelle verwendet werden, da einzelne Merkmale des ausgedehnten Objektes ebenfalls mehrfach in dem Mehrfachbild angeordnet sind.

Gemäß einem Ausführungsbeispiel umfasst eine Vorrichtung zur Messung einer Aberration einen Bildsensor, eine Projektionsoptik zur optischen Projektion auf den Bildsensor, eine optische Einrichtung zur Beeinflussung der optischen Projektion auf den Bildsensor so, dass auf dem Bildsensor ein Mehrfachbild entsteht, und eine Auswerteeinrichtung, die ausgebildet ist, um auf Basis des Mehrfachbildes eine Information bezüglich der Aberration zu bestimmen. Vorteilhaft ist, dass die Information bezüglich der Aberration aus dem Mehrfachbild schnell und auch für hohe Objektausdehnungen erhalten werden kann. Verglichen mit einer Auswertung auf mehreren Bildsensoren kann eine relative Lage von Einzelmerkmalen mit hoher Genauigkeit und gleichzeitig ausgewertet werden.

Gemäß einem weiteren Ausführungsbeispiel ist die Auswerteeinrichtung ausgebildet, um das Mehrfachbild unter Anwendung einer Mustererkennung auszuwerten, und um basierend auf der Mustererkennung die Information bezüglich der Aberration zu bestimmen. Vorteilhaft daran ist, dass bereits anhand des Musters in dem Mehrfachbild die Information bezüglich der Aberration bestimmt werden kann, so dass auf eine Auswertung des gesamten Mehrfachbildes verzichtet werden kann, was eine geringe Rechenleistung erfordert.

Gemäß einem weiteren Ausführungsbeispiel ist die optische Einrichtung ausgebildet, um die optische Projektion so zu beeinflussen, dass eine erste Art der Aberration eine erste, der ersten Art zugeordnete Veränderung eines Musters in dem Mehrfachbild bewirkt und dass eine zweite Art der Aberration eine zweite, der zweiten Art zugeordnete Veränderung des Musters in dem Mehrfachbild bewirkt. Vorteilhaft ist, dass basierend auf der Veränderung des Musters in dem Mehrfachbild, etwa eine Rotationsänderung oder eine Abstandsänderung einzelner Merkmale, auf die Art der Aberration zurückgeschlossen werden kann.

Gemäß einem weiteren Ausführungsbeispiel ist die Auswerteeinrichtung ausgebildet ist, um ein Cepstrum der optischen Projektion zu berechnen, und um aus dem Cepstrum die Information bezüglich der Aberration zu bestimmen. Vorteilhaft daran ist, dass das Cepstrum mit vergleichsweise geringem Rechenaufwand berechnet werden kann und gleichzeitig eine hohe Detektierbarkeit von Nebenmaxima der erhaltenen Ergebnisse ermöglicht ist, so dass eine rasche und zuverlässige Erkennung von Objektmerkmalen ermöglicht ist.

Gemäß einem weiteren Ausführungsbeispiel umfasst die optische Einrichtung diffraktives optisches Element zum Erzeugen des Mehrfachbildes. Vorteilhaft daran ist, dass das diffraktive optische Element so ausgestaltet werden kann, dass es verschiedenen Arten von Aberration verschiedene Einflüsse auf eine Point Spread Function (Punktspreizfunktion - PSF) zuordnet, das bedeutet, dass unter Einfluss von verschiedenen Arten von Aberrationen unterschiedliche Beeinflussungen des Mehrfachbildes erfolgen. Diese unterschiedlichen Beeinflussungen können in vorteilhafter Weise in der optischen Projektion ausgewertet werden. Ferner kann durch das diffraktive Element das Mehrfachbild erzeugt werden, ohne den Projektions-/ Abbildungsmaßstab der Projektionsoptik zu verringern.

Gemäß einem weiteren Ausführungsbeispiel weist das Mehrfachbild eine Mehrzahl von Einzelbildern auf, die sich teilweise überlappen. Vorteilhaft daran ist, dass ein Bedarf an Bildsensorfläche trotz Erzeugen eines Mehrfachbildes gering bleiben kann bzw. der Abbildungsmaßstab der Projektionsoptik nicht verkleinert werden muss und gleichzeitig die Bestimmung der Information bezüglich der Aberration erfolgen kann. So kann beispielsweise ein spezifisches Merkmal, welches in jedem der Einzelbilder angeordnet ist, relativ zueinander ausgewertet werden, da die spezifischen Merkmale auch bei Überlappung der Einzelbilder erkennbar und identifizierbar sind.

Gemäß einem weiteren Ausführungsbeispiel umfasst ein Abbildungssystem eine Vorrichtung zur Messung einer Aberration, eine Einstelleinrichtung, die ausgebildet ist, um die Projektionsoptik unter Verwendung der Information bezüglich der Aberration so einzustellen, dass ein Einfluss der Aberration auf die Projektion auf den Bildsensor gegenüber einem von der Vorrichtung erfassten Zustand reduziert ist. Das Abbildungssystem umfasst ferner eine Steuereinrichtung zum Steuern der optischen Einrichtung. Die Steuereinrichtung ist ausgebildet, um die optische Einrichtung so zu steuern, dass diese in einem ersten Zeitintervall angeordnet ist, um die optische Projektion auf den Bildsensor so zu beeinflussen, dass auf dem Bildsensor das Mehrfachbild entsteht, und um die optische Einrichtung so anzusteuern, dass diese in einem zweiten Zeitintervall angeordnet ist, um die optische Projektion auf den Bildsensor zumindest in einem gegenüber dem ersten Zeitintervall geringeren Umfang zu beeinflussen. Nicht abschließend umfasst dies, dass die optische Einrichtung in dem ersten Zeitintervall in dem Strahlengang angeordnet ist und in dem zweiten Zeitintervall in dem Strahlengang nicht angeordnet ist. Vorteilhaft daran ist, dass in dem ersten Zeitintervall eine Korrektur der Aberration bestimmbar ist und in dem zweiten Zeitintervall mit gleichen optischen Mitteln die optische Projektion mit reduziertem Einfluss der Aberration erfassbar ist.

Gemäß einem weiteren Ausführungsbeispiel umfasst ein Abbildungssystem eine Vorrichtung zum Messen einer Aberration, einen weiteren, zweiten Bildsensor, eine weitere, zweite Projektionsoptik zur optischen Projektion auf den zweiten Bildsensor und eine Einstelleinrichtung, die ausgebildet ist, um die zweite Projektionsoptik unter Verwendung der Information bezüglich der Aberration so einzustellen, dass ein Einfluss der Aberration auf die Projektion auf den zweiten Bildsensor gegenüber einem von der Vorrichtung zur Messung einer Aberration erfassten Zustand reduziert ist. Vereinfacht kann die Vorrichtung zur Messung einer Aberration in dem Abbildungssystem als Zusatzvorrichtung zur Korrektur eines anderen abbildenden Systems umfassend den zweiten Bildsensor eingesetzt werden. Vorteilhaft daran ist, dass die Vorrichtung zur Messung der Aberration auch für andere abbildende Systeme einsetzbar ist.

Gemäß einem weiteren Ausführungsbeispiel umfasst ein Verfahren zum Messen einer Aberration ein Bereitstellen eines Bildsensors, ein Anordnen einer Projektionsoptik zur optischen Projektion auf den Bildsensor, ein Beeinflussen der optischen Projektion auf den Bildsensor mit einer optischen Einrichtung so, dass auf dem Bildsensor ein Mehrfachbild entsteht, und ein Bestimmen einer Information bezüglich der Aberration auf Basis des Mehrfachbilds.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

| | |
|---|---|
| Fig. 1 | ein schematisches Blockschaltbild einer Vorrichtung zur Messung einer Aberration gemäß einem Ausführungsbeispiel; |
| Fig. 2a | eine schematische perspektivische Ansicht einer optischen Einrichtung gemäß einem Ausführungsbeispiel, die zum Erzeugen des Mehrfachbildes ein erstes Prisma und ein zweites Prisma umfasst; |
| Fig. 2b | eine schematische perspektivische Ansicht einer optischen Einrichtung gemäß einem Ausführungsbeispiel, die zum Erzeugen des Mehrfachbildes eine verglichen mit Fig. 2a höhere Anzahl von Prismen umfasst; |
| Fig. 2c | eine schematische Aufsicht auf eine optischen Einrichtung gemäß einem Ausführungsbeispiel, die ein diffraktives Element mit zwei wirksamen Bereichen umfasst; |
| Fig. 2d | eine schematische perspektivische Ansicht des diffraktiven Elements aus Fig. 2c; |
| Fig. 2e | eine schematische Aufsicht auf eine optischen Einrichtung gemäß einem Ausführungsbeispiel, die ein diffraktives Element mit vier wirksamen Bereichen umfasst; |
| Fig. 2f | eine schematische perspektivische Ansicht des diffraktiven Elements aus Fig. 2e; |
| Fig. 3a bis 3d | eine schematische Aufsicht auf ein Mehrfachbild gemäß einem Ausführungsbeispiel und umfassend zwei Teilbilder, welches in einer Fokusebene der Vorrichtung aus Fig. 1 erhalten werden kann; |
| Fig. 4a bis 4d | eine mit den Fig. 3a bis 3d vergleichbare Darstellung gemäß einem Ausführungsbeispiel, bei der eine optische Einrichtung ausgebildet ist, um das Mehrfachbild so zu erzeugen, dass es eine Anzahl von N = 4 Einzelbilder umfasst; |
| Fig. 5a bis 5e | eine schematische Darstellung eines Mehrfachbildes mit N=4 Einzelbildern für eine ausgedehnte Objektverteilung gemäß einem Ausführungsbeispiel; |
| Fig. 5f | eine schematische Darstellung eines Cepstrums, das basierend auf der Bildverteilung in Fig. 5b erhalten werden kann; |
| Fig. 5g | eine schematische Darstellung eines Cepstrums, das basierend auf der Bildverteilung in Fig. 5c erhalten werden kann; |
| Fig. 6 | ein schematisches Blockschaltbild einer Vorrichtung zur Messung einer Aberration gemäß einem Ausführungsbeispiel, bei der die optische Einrichtung an einer dem Bildsensor abgewandten Seite einer Linse angeordnet ist; |

Fig. 7     ein schematisches Blockschaltbild einer weiteren Vorrichtung zur Bestimmung einer Aberration gemäß einem Ausführungsbeispiel;

Fig. 8     ein schematisches Blockschaltbild eines Abbildungssystems gemäß einem Ausführungsbeispiel umfassend eine Vorrichtung zur Messung einer Aberration;

Fig. 9     eine schematisches Blockschaltbild eines weiteren Abbildungssystems gemäß einem Ausführungsbeispiel; und

Fig. 10    ein schematisches Flussdiagram eines Verfahrens zum Messen einer Aberration gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

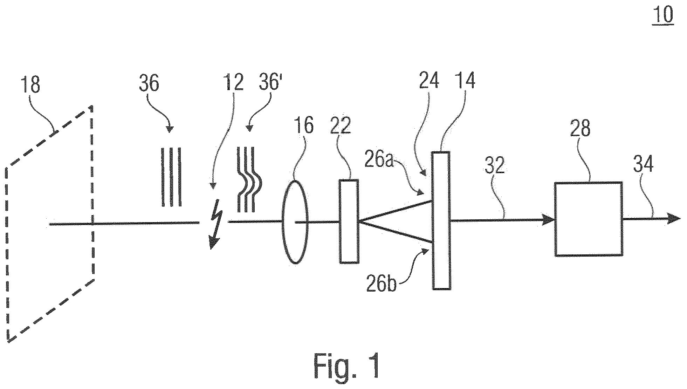

Fig. 1 zeigt ein schematisches Blockschaltbild einer Vorrichtung 10 zur Messung einer Aberration 12. Unter Aberration soll in diesem Zusammenhang sondern jegliche Art von Abbildungsfehler in einem optischen System verstanden werden. Beispielsweise kann es sich bei der Aberration 12 um eine Defokussierung der optischen Projektion auf einen Bildsensor 14, um eine Koma-Aberration der optischen Projektion, um einen Astigmatismus der optischen Projektion und/oder um eine Zernike-Mode handeln. Eine Koma-Aberration, d. h. ein Asymmetriefehler, kann beispielsweise bei einem schräg zur optischen Achse einfallenden Strahlbündel durch eine Überlagerung zweier Abbildungsfehler entstehen. Herbei kann es sich beispielsweise um eine sphärische Aberration bei einem achsparallelen Strahlbündel und einen Astigmatismus schiefer Bündel handeln. Die Aberration 12 kann durch atmosphärische Störungen, etwa Temperaturunterschiedenen in verschiedenen Luftschichten, und/oder durch Komponenten der Vorrichtung 10 beeinflusst oder hervorgerufen sein. Beispielsweise können mechanische thermische Verformungen einer Abbildungsoptik 16 und/oder zu Abstandsänderungen zwischen der Abbildungsoptik 16 und dem Bildsensor 14 führende Verformungen zu Aberrationen führen.

Die Vorrichtung 10 umfasst einen Bildsensor 14 und eine Projektionsoptik 16 zur optischen Projektion auf den Bildsensor 14. Beispielsweise kann die Vorrichtung 10 ausgebildet sein, um einen Objektbereich 18 unter Nutzung der Projektionsoptik 16 auf den Bildsensor 14 zu projizieren, d. h. abzubilden. Die Projektionsoptik 16 kann als Linse, Linsenkombination oder umfassend andere abbildende Elemente ausgeführt sein. Die Projektionsoptik kann ausgebildet sein, um eine gemeinsame Fokussierung der Abbildung zu ermöglichen. Die Vorrichtung 10 umfasst ferner eine optische Einrichtung 22 zur Beeinflussung der optischen Projektion auf den Bildsensor 14, so dass auf dem Bildsensor 14 ein Mehrfachbild 24 entsteht. Hierfür kann die optische Einrichtung 22 zumindest ein geeignetes optisches Element umfassen, um eine Erzeugung von zumindest zwei Einzelbildern 26a und 26b aus einer erfassten Szene zu ermöglichen, bspw. ein diffraktives Element, eine Kombination von zumindest zwei Prismen oder einen Strahlteiler. Basierend auf einer gemeinsamen Fokussierung der Projektionsoptik 16 kann das Mehrfachbild und somit die Einzelbilder 26a und 26b zumindest bei Abwesenheit einer Aberration ebenfalls eine gemeinsame Fokussierung aufweisen, d. h., die Fokussierung ist lediglich unwesentlich von der optischen Einrichtung 22 beeinflusst. Die Erzeugung der Einzelbilder 26a und 26b aus dem Strahlengang kann dabei in Transmission und/oder Reflexion erfolgen. Eine Anzahl der Einzelbilder 26a und 26b des Mehrfachbildes 24 kann eine beliebige Anzahl von zumindest zwei betragen, beispielsweise zwei, drei, vier oder mehr.

Vorteilhaft an einem diffraktiven Element ist, dass es selbst keine Abbildung erzeugt, was auch so verstanden werden kann, dass die Brennweite "unendlich" ist. Somit wird der Projektionsmaßstab der Abbildungsoptik 16 nicht beeinflusst, wodurch sich Teilbilder der Mehrfachbilder überlappen können. Die Objektabtastung durch die Abbildungsoptik 16 wird somit nicht verringert, wodurch auch kleine Objektmerkmale aufgelöst werden können, um die Aberrationen robuster zu messen.

Das Mehrfachbild 24 kann eine Mehrzahl von Einzelbildern 26a und 26b umfassen, das bedeutet, die optische Einrichtung 22 ist ausgebildet, um eine Mehrfachprojektion auf den Bildsensor 14 zu bewirken. Die Einzelbilder können getrennt oder beabstandet von einander auf den Bildsensor 14 projiziert sein. Ein Abstand mit welchem die Einzelbilder 26a und 26b auf dem Bildsensor 14 projiziert werden, etwa ein Abstand geometrischer Mittelpunkte derselben, kann von der optischen Einrichtung 22 beeinflusst sein. Eine Überlappung der Einzelbilder kann von einer Ausdehnung der erfassten Szene in dem Objektbereich zumindest beeinflusst sein. So können bspw. Punktquellen oder kleine Szenen getrennt voneinander auf dem Bildsensor 14 projiziert werden, während sich Einzelbilder ausgedehnter Szenen mit einander überlappen.

Die optische Einrichtung 22 kann ausgebildet sein, um die Einzelbilder 26a und 26b in bei einer störungsfreien Aufnahme mit einer vorbestimmten Positionierung zueinander auf den Bildsensor 14 zu projizieren. Bspw. kann die optische Einrichtung 22 ausgebildet sein, um eine Anzahl von zwei Einzelbilder 26 zu erzeugen und diese achssymmetrisch bezogen auf eine von der optischen Einrichtung 22 bestimmte Symmetrieachse zu einander zu verschieben. Alternativ kann die optische Einrichtung 22 ausgebildet sein, um eine Anzahl von vier Einzelbilder 26 zu erzeugen und diese achssymmetrisch bezogen auf zwei von der optischen Einrichtung 22 bestimmte Symmetrieachsen zu einander zu verschieben, etwa in einem Winkel von 90° zueinander und bezogen auf eine Bildoberfläche des Bildsensors 14. Alternativ kann eine beliebige andere Zuordnung in der optischen Einrichtung 22 implementiert sein, etwa eine Anzahl von drei Einzelbildern 26 und oder ungleiche Winkel zueinander bspw. Winkeln von 90°, 110° und 160° zueinander oder einen beliebigen anderen Wert, der in Summe 360° ergibt.

Die Vorrichtung 10 umfasst eine Auswerteeinrichtung 28, die ausgebildet ist, um Informationen von dem Bildsensor 14 zu erhalten, etwa in Form eines Bildsignals 32, das von dem Bildsensor 14 bereitgestellt wird. Bei den Informationen kann es sich somit um die Bilddaten des Mehrfachbildes 24 handeln. Die Auswerteeinrichtung 28 ist ausgebildet, um auf Basis des Mehrfachbildes 24, das von dem Bildsensor 14 erfasst und mittels des Bildsignals 32 bereitgestellt wird, eine Information bezüglich der Aberration 12 zu bestimmen. Die Auswerteeinrichtung 28 kann ausgebildet sein, um ein Ausgangssignal 34 bereitzustellen, das die Information bezüglich der Aberration 12 oder eine hiervon abgeleitete Information umfasst. Bspw. ist die Auswerteeinrichtung 28 ausgebildet, um das Mehrfachbild 24 (Ist-Zustand) mit einem Sollzustand des Mehrfachbildes 24 zu vergleichen, um die Information bzgl. der Aberration 12 zu erhalten. Dies kann unabhängig von dem tatsächlich erfassten Objektbereich erfolgen, da in der optischen Einrichtung 22 eine Anzahl von Einzelbildern 26 sowie die Anordnung derselben zueinander bestimmt sein kann. Deshalb kann jedes Merkmal des erfassten Objektbereichs in der Anzahl der Einzelbilder 26 vorliegen, unabhängig von dem erfassten Objektbereich. Die Auswerteeinrichtung 28 kann ausgebildet sein, um gleiche oder ähnliche Merkmale (Objekte) in den Einzelbilder 26 zu bestimmen und um diese Merkmale für die Bestimmung der Information bezüglich der Aberration 12 zu verwenden.

Die Aberration 12 kann bewirken, dass eine Wellenfront 36 deformiert wird, wie es durch eine deformierte Wellenfront 36' dargestellt ist. Bei der Aberration 12 kann es sich um eine beliebige Aberration handeln, die zwischen dem Objektbereich 18 und dem diffraktiven Element 22 auftritt.

Die optische Einrichtung 22 kann in der Pupille der Projektionsoptik 16 oder in einem Toleranzbereich um die Pupille herum, d. h. einem Pupillenbereich angeordnet sein. Der Pupillenbereich kann bspw. in einem Bereich von ±15 %, ±10 % oder ±5 % eines Querschnitts der Pupille der Projektionsoptik 16 angeordnet sein. Das bedeutet vereinfacht, dass die optische Einrichtung in einem Bereich angeordnet sein kann, durch den alle oder zumindest ein Großteil von zumindest 75 %, zumindest 90 % oder zumindest 95 % der Objektpunkte der aufgenommenen Szene hindurchlaufen, da alle Strahlenbündel zumindest in etwa die gleiche Position aufweisen. Der Pupillenbereich kann auch als in der Nähe der oder möglichst nahe an der Projektionsoptik 16 verstanden werden. Somit kann auf die optische Einrichtung die gesamte Wellenfront 36' treffen. Durch unterschiedliche Bereiche in der optischen Einrichtung kann somit jeweils die gesamte Wellenfront unterschiedlich und zur Erzeugung der unterschiedlichen Teilbilder 26a und 26b abgelenkt werden. Eine Aberration kann zu einer veränderten Position der Teilbilder in dem Mehrfachbild führen, was einfach, schnell, d. h. mit geringem Rechenaufwand und robust auswertbar ist.

Die Auswerteeinrichtung 28 kann ausgebildet sein, um das Mehrfachbild unter Anwendung einer Mustererkennung auszuwerten, und um basierend auf der Mustererkennung die Information bezüglich der Aberration 12 zu bestimmen. Bei dem Muster kann es sich beispielsweise um eine Verschiebung und/oder Verzerrung in dem Mehrfachbild 24 oder zumindest eines Merkmals eines der Einzelbilder 26a und/oder 26b handeln, die von der Auswerteeinrichtung 28 festgestellt wird. Die Auswerteeinrichtung 28 kann beispielsweise durch Vergleich zumindest eines Merkmals mit einer Referenzinformation (Sollzustand) auf das Auftreten und/oder die Art und/oder die Stärke (Amplitude) der Aberration 12 schließen. Als Referenzinformation kann beispielsweise eine Einflussmatrix in der Auswerteeinrichtung 28 oder in einem für die Auswerteeinrichtung 28 zugänglichen Speicher hinterlegt sein. Die Einflussmatrix kann beispielsweise eine Information darüber aufweisen, welche Art und/oder welche Stärke von Aberration welchen Effekt auf das Mehrfachbild 24 ausübt und kann im Zuge einer Kalibrierung gewonnen werden. Alternativ oder zusätzlich kann eine weitere Referenzinformation, etwa eine inverse Einflussmatrix, in der Auswerteeinrichtung 28 oder einem für die Auswerteeinrichtung 28 zugänglichen Speicher hinterlegt sein, die eine Information darüber bereitstellt, wie zumindest eine optische Komponente eines optischen Systems zu beeinflussen ist, um den Einfluss der Aberration 12 zu reduzieren oder im Idealfall zu kompensieren. Bspw. kann mit der Einflussmatrix der Effekt der Aberration und mit der inversen Einflussmatrix eine Anleitung zu dessen Reduzierung erhalten werden. Die Reduzierung kann bspw. eine Beeinflussung eines optischen Elementes umfassen, wie es später erläutert wird.

In anderen Worten umfasst die optische Einrichtung 22 ein optisches Element, etwa diffraktiv, welches die Wellenfront des Gesamtsystems so verändert, dass Doppel-/bzw. Mehrfachbilder in der Bildebene erzeugt werden.

Obwohl die optische Einrichtung 22 so dargestellt ist, dass sie zwischen der Projektionsoptik 16 und dem Bildsensor 14 angeordnet ist, kann die optische Einrichtung 22 auch an einer anderen Stelle angeordnet ist, etwa an einer dem Bildsensor 14 abgewandten Seite der Projektionsoptik 16. Die Projektionsoptik 16 kann auch mehrere optische Elemente umfassen, die jeweils unabhängige voneinander als Linse, Spiegel, Prisma oder dergleichen gebildet sein können. Die optische Einrichtung 22 kann zwischen zwei optischen Elementen der Projektionsoptik 16 angeordnet sein.

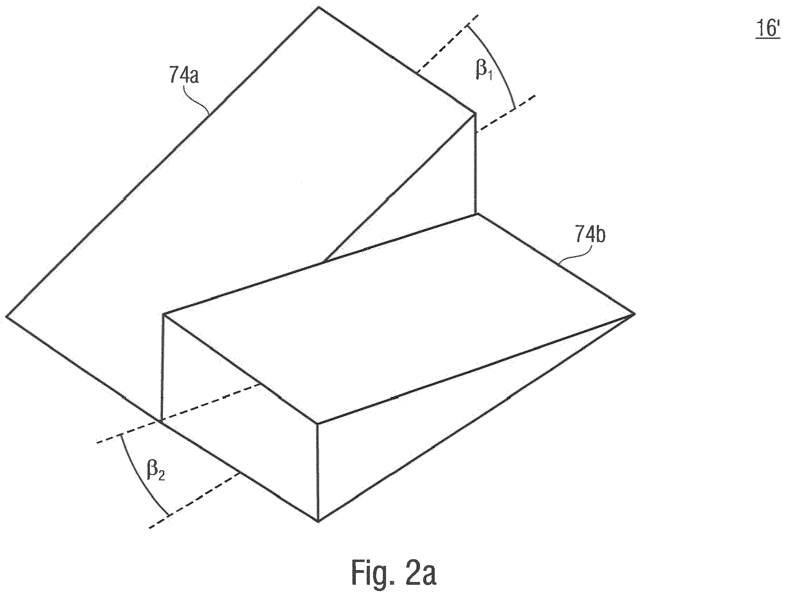

Fig. 2a zeigt eine schematische perspektivische Ansicht einer optischen Einrichtung 22', die zum Erzeugen des Mehrfachbildes ein erstes Prisma 74a und ein zweites Prisma 74b umfasst. Die optische Einrichtung 22' weist einen Bereich pro erzeugtem Teilbild auf. Die Bereiche, d. h. die Prismen beeinflussen unterschiedliche laterale Abschnitte der auf die Projektionsoptik einfallenden Wellenfront unterschiedlich. Die Prismen 74a und 74b sind hierfür bspw. nebeneinander und zu einander geneigt angeordnet, d. h. um von einander verschiedene Winkel $\beta_1$ und $\beta_2$ gekippt. Zwar können die Winkel $\beta_1$ und $\beta_2$ betragsmäßig gleich sein, sie unterscheiden sich in diesem Fall jedoch in ihrer Orientierung. Bspw. können die Winkel $\beta_1$ und $\beta_2$ gegensinnig (180°) zueinander im Raum orientiert sein. Die Prismenanordnung ist ausgebildet, um das Mehrfachbild so zu erzeugen, dass es zwei Teilbilder umfasst bzw. den Objektbereich zweifach abbildet. Jedes der Prismen 74a und 74b bildet einen Bereich der optischen Einrichtung 22'. Durch die unterschiedlichen Winkel der Prismen 74a und 74b relativ zu der eintreffenden Wellenfront und/oder einer Substratoberfläche kann jeweils ein Anteil der auftreffenden Wellenfront in eine von einander verschiedene Richtung abgelenkt werden, wenn das Mehrfachbild erzeugt wird, wobei ein Fokus für die gesamte Wellenfront gleich ist.

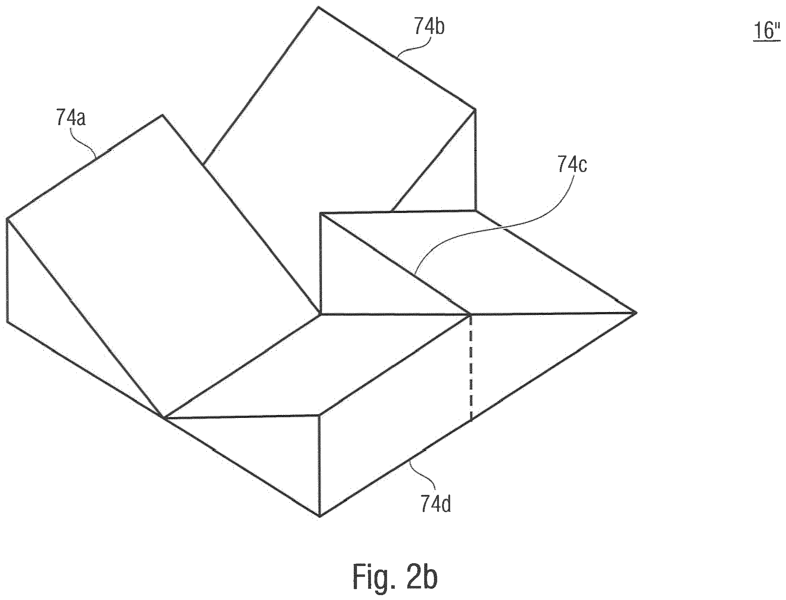

Fig. 2b zeigt eine schematische perspektivische Ansicht einer optischen Einrichtung 22", die zum Erzeugen des Mehrfachbildes eine höhere Anzahl, etwa vier, Prismen 74a bis 74d umfasst. Die Prismen können mit betragsmäßig gleichen oder unterschiedlichen Winkeln gegenüber einer Substratoberfläche oder einer Bildoberfläche verkippt sein und eine von einander verschiedene Orientierung im Raum aufweisen. So kann bspw. eine Neigung des Prismas 74b relativ zu einer Neigung des benachbarten Prismas 74c um 180° verdreht oder rotiert sein, gegenüber einer Neigung des ebenfalls benachbarten Prismas 74a jedoch nur um 90°. Die Drehung der Prismen und/oder die Winkel der Prismen können einen beliebigen Wert aufweisen. Die Prismenanordnung ist ausgebildet, um das Mehrfachbild so zu erzeugen, dass es in Übereinstimmung mit der Anzahl der Prismen vier Teilbilder umfasst bzw. den Objektbereich vierfach abbildet.

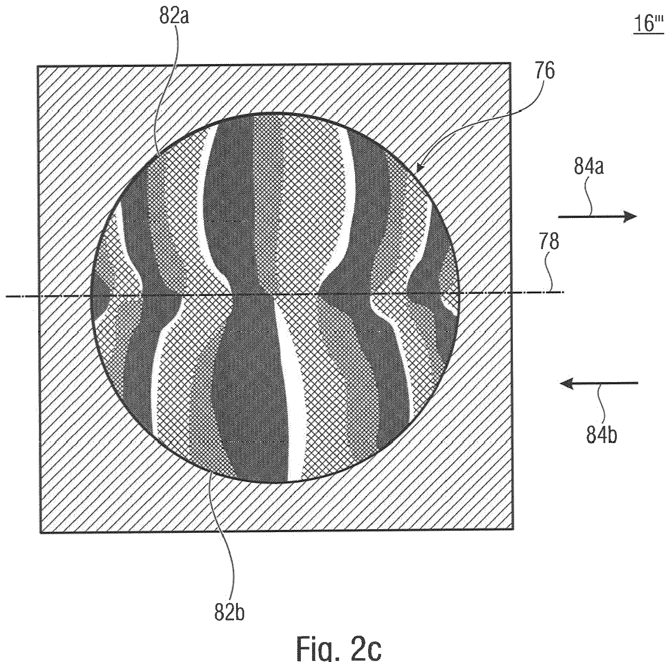

Fig. 2c zeigt eine schematische Aufsicht auf eine optischen Einrichtung 22"', die ein diffraktives Element 76 umfasst. Die Aufsicht zeigt ein beispielhaftes Höhenprofil des diffraktiven Elements 76, eine hellere Schattierung stimmt mit eine größeren Dicke überein und umgekehrt. Das diffraktive Element ist ausgebildet, um das Mehrfachbild so zu erzeugen, dass es zwei Teilbilder umfasst bzw. den Objektbereich zweifach abbildet. Hierfür weist das diffraktive Element 76 zwei durch eine virtuelle Linie 78 getrennt dargestellte Bereiche 82a und 82b auf, die ausgebildet sind, um jeweils einen Teil der auftreffenden Wellenfront in eine von einander verschiede Richtung 84a bzw. 84b umzulenken, um das Mehrfachbild zu erzeugen. Somit kann jedes Teilbild durch einen von anderen Teilen teileweise oder vollständig verschiedenen Teil der Wellenfront erzeugt werden.

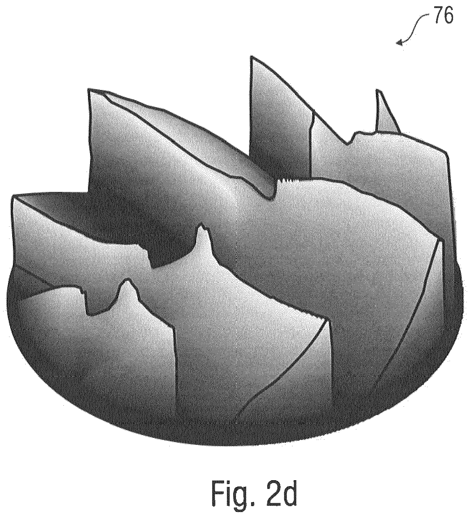

Fig. 2d zeigt eine schematische perspektivische Ansicht des diffraktiven Elements 76.

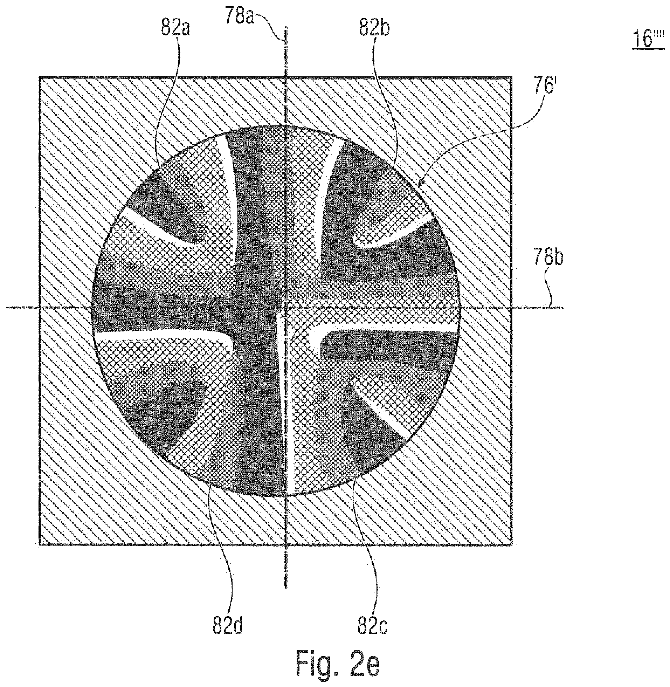

Fig. 2e zeigt eine schematische Aufsicht auf eine optische Einrichtung 22"", die ein diffraktives Element 76' umfasst. Die Aufsicht zeigt ein beispielhaftes Höhenprofil des diffraktiven Elements 76', eine hellere Schattierung stimmt mit eine größeren Dicke überein und umgekehrt. Das diffraktive Element ist ausgebildet, um das Mehrfachbild so zu erzeugen, dass es vier Teilbilder umfasst bzw. den Objektbereich vierfach abbildet. Hierfür weist das diffraktive Element 76' vier durch zwei virtuelle Linien 78a und 78b getrennt dargestellte Bereiche 82a bis 82d auf, die ausgebildet sind, um jeweils einen Teil der auftreffenden Wellenfront in eine von einander verschiede Richtung umzulenken, um das Mehrfachbild zu erzeugen. Auch bei einer Verwendung diffraktiver Elemente kann ein Fokus der Einzelbilder des Mehrfachbildes gleich sein. Somit kann jedes Teilbild durch einen von anderen Teilen teileweise oder vollständig verschiedenen Teil der Wellenfront erzeugt werden.

Gemäß weiterer Ausführungsbeispielen kann die optische Einrichtung eine von zwei oder vier verschiedene Anzahl M von wirksamen Bereichen umfassen, etwa 3, 5 oder mehr, so dass maximal eine ebensolche Anzahl von Teilbildern N und mindestens N=2 Teilbilder erzeugt wird.

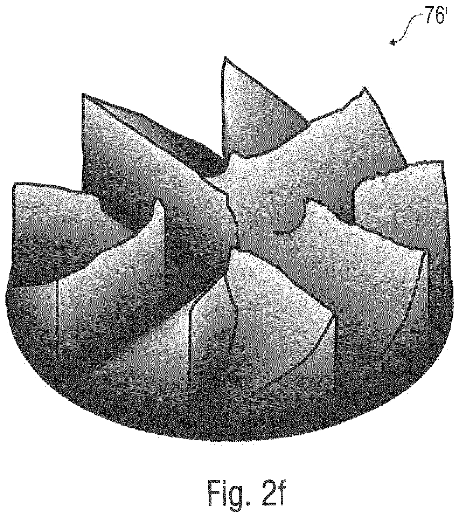

Fig. 2f zeigt eine schematische perspektivische Ansicht des diffraktiven Elements 76'.

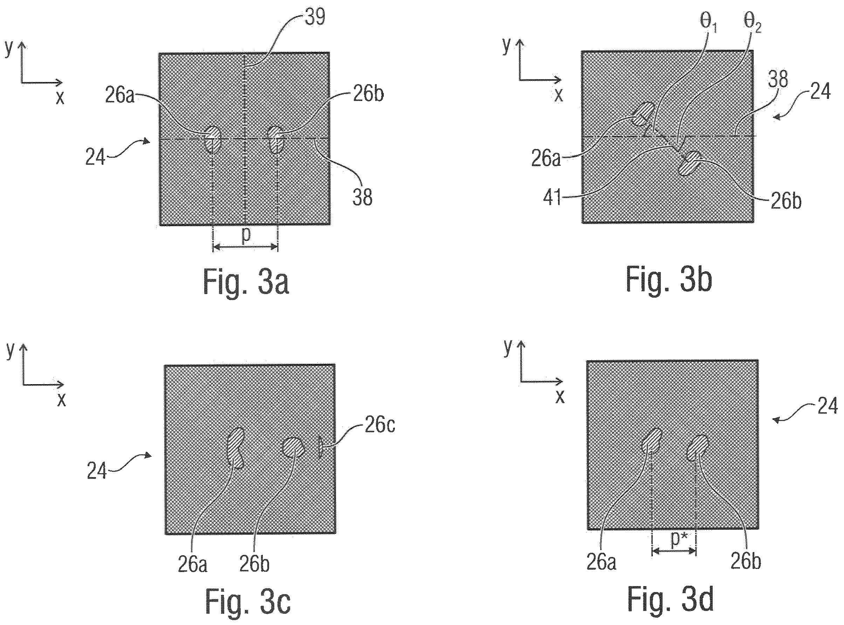

Fig. 3a bis 3d zeigen eine schematische Aufsicht auf das Mehrfachbild 24, welches in einer Fokusebene der Vorrichtung 10 erhalten werden kann. Das Mehrfachbild 24 umfasst eine Anzahl von N = 2 Einzelbilder 26a und 26b. Das bedeutet, die optische Einrichtung ist ausgebildet, um das Mehrfachbild 24 so zu erzeugen, dass es zwei Einzelbilder 26a und 26 umfasst. Beispielsweise wird eine Punktquelle von der Vorrichtung 10 erfasst und mittels der optischen Einrichtung 22 in das Mehrfachbild 24 überführt. Die Fokusebene kann mittels der Projektionsoptik 16 auf den Bildsensor 14 abgebildet werden. Einzelne Merkmale i der Abbildungen der Einzelbilder 26a und 26b können von der Auswerteeinrichtung 28 zur Bestimmung der Information bezüglich der Aberration 12 bestimmt werden, bspw. eine Intensität, eine Position oder Form des Umrisses der Abbildung oder dergleichen.

Fig. 3a zeigt eine schematische Ansicht des Mehrfachbildes 24 in einer Fokusebene in Abwesenheit eines Einflusses der Aberration 12, d. h., es erfolgt keine oder lediglich eine geringe störende Beeinträchtigung der Abbildung. Die Teilbilder 26a und 26b weisen einen Abstand p zueinander auf und sind mit selbigem entlang einer Referenzlinie 38 positioniert.

Jedes der Teilbilder 26a und 26b kann ein oder mehrere Merkmale aufweisen, die in Form von Parametern bestimmt und/oder klassifiziert werden können. Die Bestimmung und/oder Klassifikation der Merkmale i oder Parameter kann von der Auswerteeinrichtung 28 ausgeführt werden. Beispielsweise kann es sich bei den Parametern um eine

relative Intensität $I_i$ des Merkmals i, um einen Rotationswinkel $\theta_i$ des Merkmals *i* oder ein anderes mittels Bildverarbeitung auswertbares Bildmerkmal handeln. Da das entsprechende Bildmerkmal in jedem der Teilbilder 26a und 26b anwesend ist, kann die Auswerteeinrichtung 28 einen Vergleich der Parameter in den Teilbildern 26a und 26b ausführen. Ferner kann die Auswerteeinrichtung 28 ausgebildet sein, um andere Parameter auszuwerten, beispielsweise solche, die in Bezug zu dem jeweiligen Merkmal des anderen Teilbildes gesetzt werden. Hierzu gehört beispielsweise der Abstand p, ein Vergleich der Intensität $I_i$ des Merkmals in den Teilbildern 26a und 26b, ein Rotationswinkel des einzelnen Teilbildes und/oder eine relative Verbreiterung/Verwaschung entlang einer ersten Bildrichtung x und/oder einer zweiten Bildrichtung y des Merkmals an den verschiedenen Bildpositionen, d. h. in den verschiedenen Teilbildern 26a und 26b des Mehrfachbildes 24. Manche der Merkmale können gegenüber einem Sollzustand verglichen werden, manche der Merkmale können relativ zueinander verglichen werden. Die Einzelbilder 26a und 26b können bspw. symmetrisch zu einer Symmetrieachse 39 angeordnet sein.

Fig. 3b zeigt eine schematische Ansicht der Bildverteilung des Mehrfachbildes 24 in der Fokusebene, bei der die Punktquelle, d. h. das Merkmal, gegenüber der Referenzlinie 38 um einen Winkel $\theta_1$ rotiert ist. Alternativ oder zusätzlich kann das Merkmal des Teilbildes 26b bezüglich der Referenzlinie 38 um einen Winkel $\theta_2$ rotiert sein. Die Winkel $\theta_1$ und $\theta_2$ können gleich oder voneinander verschieden sein. Die optische Einrichtung kann ausgebildet sein, um die Abbildung der Einzelbilder 26a und 26 so zu beeinflussen, dass bei Auftreten einer Aberration eine Verbindungslinie 41 zwischen den Merkmalen der Einzelbilder 26a und 26b gegenüber Fig. 3a um den Winkel $\theta_1$ oder $\theta_2$ rotiert ist.

Fig. 3c zeigt eine schematische Ansicht der Bildverteilung in der Fokusebene, bei der das Merkmal des Einzelbildes 26a und das Merkmal des Einzelbildes 26b des Mehrfachbildes 24 gegenüber der fehlerfreien Darstellung in Fig. 3a eine Verbreiterung/Verwaschung entlang beider Bildrichtungen x und y aufweist. So ist das Merkmal des Einzelbildes 26a beispielsweise entlang der y-Richtung vergrößert und stellenweise entlang der x-Richtung in seiner Ausdehnung verringert. Das Merkmal des Einzelbildes 26b ist hingegen entlang der y-Richtung in seiner Ausdehnung verringert und/oder entlang der x-Richtung in seiner Ausdehnung vergrößert.

Fig. 3d zeigt eine schematische Ansicht der Bildverteilung in der Fokusebene, bei der die Merkmale der Einzelbilder 26a und 26b einen veränderten Abstand $p^*$ zueinander aufweisen, beispielsweise ist dieser gegenüber dem Abstand p der Fig. 3a verringert.

Die Veränderungen der Fig. 3b bis 3d gegenüber der Fig. 3a können jeweils dadurch bewirkt werden, dass die optische Einrichtung 22 beim Auftreten einer Aberration 12 eine entsprechende Veränderung der Abbildung vornimmt. Hierfür kann die optische Einrichtung M Teilbereiche aufweisen, etwa die Bereiche 74 und/oder 82. Durch die Projektionsoptik ermöglicht jeder dieser Teilbereiche ein eigenes, d. h., zugeordnetes Teilbild des Mehrfachbildes. Da sich eine Aberration unterschiedlich auf die jeweiligen Teilbereiche auswirkt, sind die Teilbilder auch unterschiedlich verschoben/verzerrt. Bei einer beispielhaften optischen Einrichtung, die als diffraktives Element gebildet und beispielhaft mit M=2 Teilbereichen gebildet ist, wie es im Zusammenhang mit den Fig. 2c und 2d beschrieben ist, kann ein Ergebnis erhalten werden, wie es im Zusammenhang mit den Fig. 3a bis 3d beschrieben ist. Eine Defokusaberration führt bspw. dazu, dass ein Teilbild 26a nach oben und das andere Teilbild 26b nach unten verzerrt wird. Als Resultat weisen Merkmal 26a und 26b nun einen Winkel $\Theta$ ungleich 0 zueinander auf.

Zwischen der Anzahl der M Teilbereiche der optischen Einrichtung und der Anzahl der N Teilbilder kann eine 1:1-Beziehung bestehen, es kann jedoch auch eine andere Beziehung bestehen. Die Anzahl N der Teilbilder kann mit einer Anzahl der Peaks der PSF übereinstimmen. K kann eine Anzahl der Nebenmaxima (pro Ordnung) im Cepstrum beschreiben. Zwischen den Variablen K, M und N können folgende Beziehungen gelten: (1) Je nachdem wie genau jedes der M Bereiche des diffraktiven Elements ausgelegt/designt ist, können einzelne Teilbilder exakt überlappen, sodass die Anzahl N der trennbaren/identifizierbaren Teilbilder kleiner M sein kann. Prinzipiell gilt also: M≥N, wobei N und M jeweils mindestens 2 ist, also ein Mehrfachbild und mehrere Teilbereiche realisiert sind. (2) Ebenso können die Teilbilder auch so zueinander ausgerichtet sein, dass einzelne Nebenmaxima (1. Ordnung) des Cepstrums exakt überlappen, sodass die Anzahl K der trennbaren/identifizierbaren Nebenmaxima (pro Ordnung) kleiner N(N-1) sein kann. Prinzipiell gilt: K≤ N(N-1).

Das bedeutet, dass die optische Einrichtung 22 ausgebildet ist, um beim Auftreten einer ersten Art der Aberration 12 die Rotation der Merkmale gemäß Fig. 3b zu bewirken und/oder gemäß einer zweiten Ausführung ausgebildet ist, um beim Auftreten der ersten Art der Aberration 12 die Veränderung/Verwaschung gemäß Fig. 3c zu bewirken und/oder in einer dritten Ausbildung konfiguriert ist, um den veränderten Abstand $p^*$ zu bewirken, wenn die erste Art der Aberration 12 auftritt. Alternativ oder zusätzlich kann die optische Einrichtung 22 auch so ausgebildet sein, dass sie die Rotation gemäß Fig. 3b beim Auftreten der ersten Art der Aberration 12, die Verbreiterung/Verwaschung beim Auftreten einer zweiten Art der Aberration 12 und/oder die Bewirkung des veränderten Abstandes $p^*$ beim Auftreten einer dritten Art der Aberration 12 bewirkt, wobei die erste, zweite und dritte Art der Aberration voneinander verschieden sind. Beispielsweise kann es sich bei dem in der Fig. 3b dargestellten Fall um das Auftreten eines Defokus handeln. Bei dem in Fig. 3c dargestellten Effekt kann es sich beispielsweise um ein Koma handeln. Bei dem in Fig. 3d dargestellten Fall kann es sich beispielsweise um eine Astigmatismus-Aberration handeln.

Wie es in Fig. 3c dargestellt ist, kann die optische Einrichtung 22 auch ausgebildet sein, um beim Auftreten einer Aberration ein zusätzliches Bild oder Bildelement 26c entstehen zu lassen.

Die Auswerteeinrichtung 28 ist ausgebildet, um die jeweilige Veränderung festzustellen. In manchen Szenarien ist der Vorrichtung 10 jedoch unbekannt, welches Objekt gerade erfasst wird, so dass beispielsweise die Parameter gemäß Fig. 3a unbekannt sind. Basierend auf der Konfiguration der optischen Einrichtung 22 können jedoch auch der Abstand p und/oder eine Lage der Referenzlinie 38 zumindest entlang einer der Bildrichtungen x oder y bekannt sein. Das bedeutet, dass die Auswerteeinrichtung 28 ausgebildet sein kann, um die Merkmale der Einzelbilder 26a und 26b miteinander zu vergleichen, etwa eine Form der Merkmale der Einzelbilder 26a und 26b in Fig. 3c. Durch den relativen Vergleich der beiden Merkmale untereinander kann die Auswerteeinrichtung 28 ausgebildet sein, um auf die Anwesenheit und/oder Art der Aberration 12 sowie deren Stärke zu schließen.

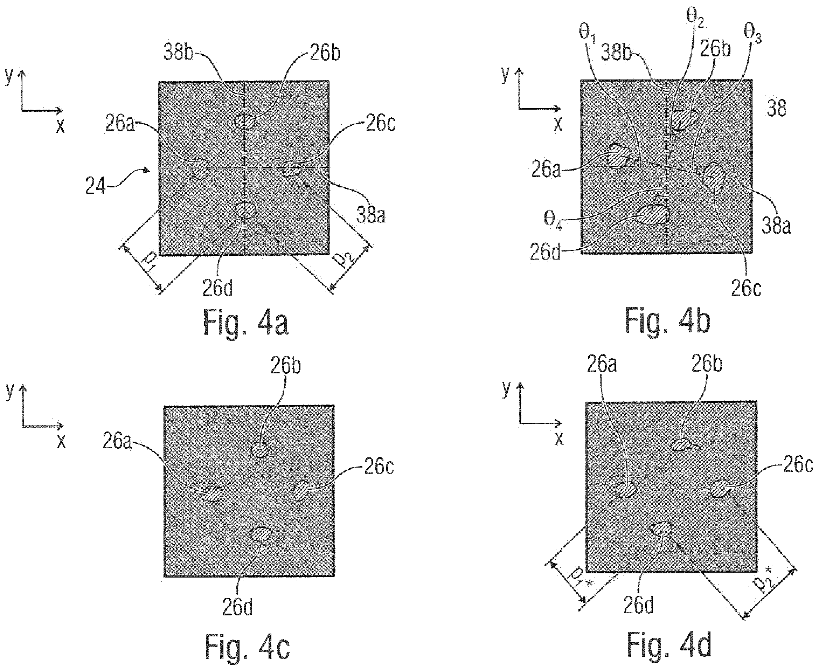

Fig. 4a bis 4d zeigen eine mit den Fig. 3a bis 3d vergleichbare Darstellung, bei der die optische Einrichtung 22 ausgebildet ist, um das Mehrfachbild 24 so zu erzeugen, dass jedes Element mit einer Anzahl von N = 4 Einzelbildern 26a-d abgebildet wird.

Die Fig. 4a zeigt schematisch einen Fall in Abwesenheit einer Aberration 12. Die Merkmale der Einzelbilder 26a bis 26d sind beispielsweise jeweils paarweise entlang einer Referenzlinie 38a und 38b angeordnet. Obwohl die Referenzlinien 38a und 38b so dargestellt sind, dass sie senkrecht zueinander entlang der Richtungen x und y angeordnet sind, können die Referenzlinien 38a und 38b auch einen von 90° verschiedenen Winkel zueinander aufweisen. Dies ist beispielsweise über eine Ausbildung oder Einstellung der optischen Einrichtung 22 möglich. Jedes der Merkmale der Einzelbilder 26a bis 26d weist zu jedem anderen Merkmal in den anderen Teilbildern einen Abstand auf, was beispielhaft für den Abstand $p_1$ zwischen den Merkmalen der Einzelbilder 26a und 26d und den Abstand $p_2$ zwischen den Merkmalen der Einzelbilder 26d und 26c dargestellt ist. Im fehlerfreien Fall können die jeweiligen Abstände benachbarter Objekte gleich oder basierend auf der Einstellung der optischen Einrichtung 22 voneinander verschieden sein.

Vergleichbar mit der Fig. 3b zeigt die Fig. 4b eine Rotation der Merkmale der Einzelbilder 26a bis 26d um Winkel $\theta_1$ bis $\theta_4$, die jeweils mit zumindest einem anderen Winkel, mit mehreren anderen Winkeln oder mit allen anderen Winkeln gleich oder voneinander verschieden sein können.

Vergleichbar mit der Fig. 3c zeigt die Fig. 4c das Auftreten einer Verbreiterung/Verwaschung der Merkmale der Einzelbilder 26a bis 26d. Die jeweilige Formänderung kann in den Einzelbildern 26a bis 26d voneinander verschieden sein.

Vergleichbar mit der Fig. 3d zeigt die Fig. 4d das Auftreten eines Effektes, bei dem Abstände $d'_1$ und/oder $d'_2$ gegenüber dem Szenario in der Fig. 4a verändert sind, wobei die optische Einrichtung 22 so eingestellt sein kann, dass die jeweilige Abstandsänderung $p_1/p^*_1$ und $p_2/p^*_2$ reziprok zueinander oder unabhängig zueinander ist.

Es wird deutlich, dass durch eine höhere Anzahl von Einzelbildern 26a bis 26d in dem Mehrfachbild 24 eine höhere Anzahl von Vergleichsmöglichkeiten der Merkmale untereinander erhalten werden kann. Dies kann zu einer höheren Präzision der Bestimmung der Aberration führen, auch wenn damit ggf. ein höherer Berechnungsaufwand einhergeht.

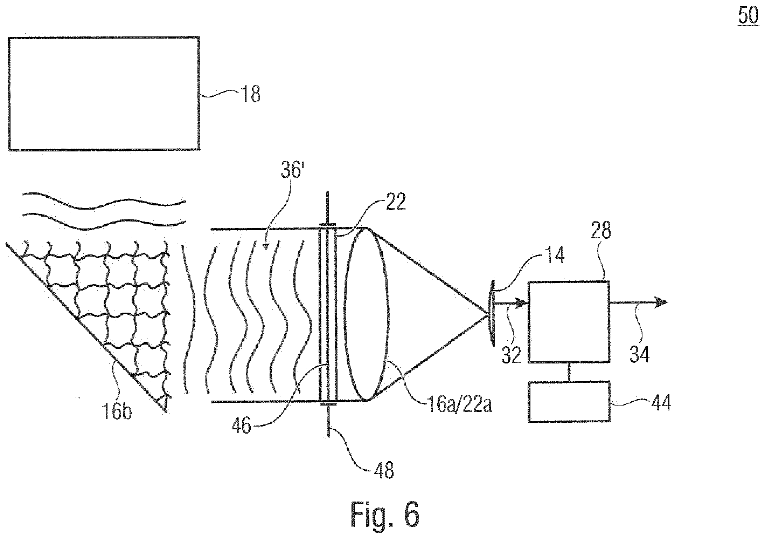

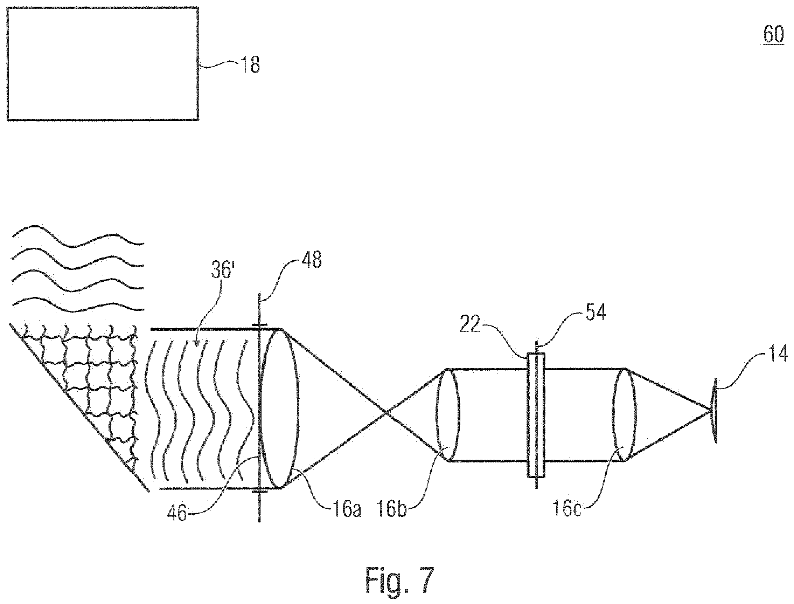

In anderen Worten zeigen die Fig. 3a bis 3d eine mögliche Form der Point Spread Function (Fourier transformierte der Wellenfront einer Punktquelle) nach dem Durchgang durch die optische Einrichtung 22 für N = 2 und in den Fig. 4a bis 4d für N = 4. Hierbei zeigen die Fig. mit Index "a" jeweils eine Abbildung ohne Wellenfrontaberrationen, die Fig. 3b und 4b jeweils eine Abbildung mit Defokus-Wellenfrontaberrationen, die Fig. 3c und 4c jeweils eine Abbildung mit einer Koma-Wellenfrontaberration und die Fig. 3d und 4d jeweils eine Abbildung mit einer Astigmatismus-Wellenfrontaberration. Diese Abbildung kann mittels eines optischen Systems, etwa der Linse 16a in Fig. 6 oder der Linse 52b in Fig. 7 in die Bildebene des Bildsensors 14 projiziert werden.

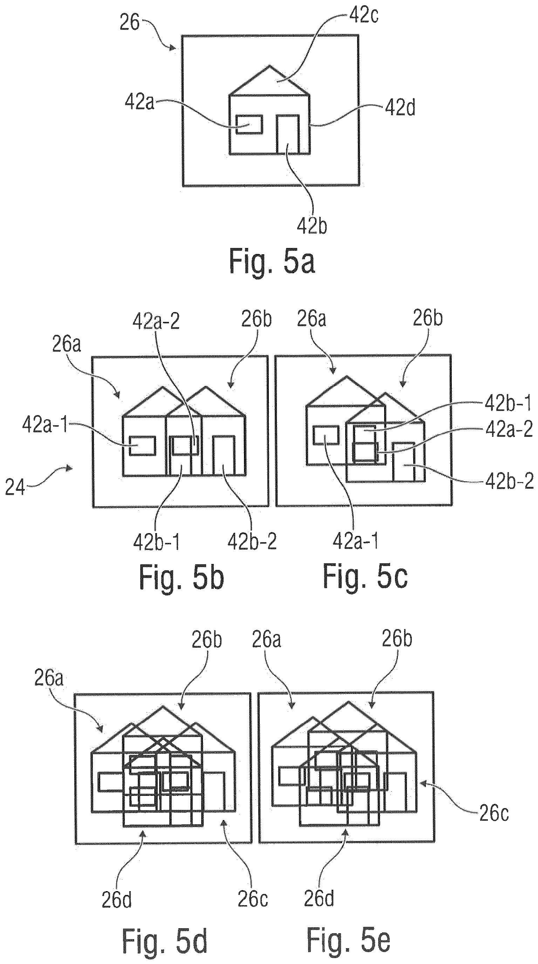

Die Fig. 5a bis 5e zeigen eine schematische Darstellung einer Bildverteilung für eine ausgedehnte Objektverteilung. Schematisch zeigt beispielsweise die Fig. 5a eine Abbildung eines Hauses, die beispielhaft für eine größere Ausdehnung verglichen mit den Punktquellen der Fig. 3a bis 3d und 4a bis 4d stehen soll. Alternativ kann dies auch so verstanden werden, dass jedes der Einzelbilder 26 des Mehrfachbildes 24 eine höhere Anzahl von Merkmalen verglichen mit der Punktquelle der vorangehend erläuterten Figuren aufweist. So weist das schematische Haus beispielsweise, jedoch nicht abschließend, Merkmale 42a bis 42d auf. Bei dem Merkmal 42a kann es sich beispielsweise um ein Fenster, bei dem Merkmal 42b um eine Tür, bei dem Merkmal 42c um ein Dach und bei dem Merkmal 42d um eine Seitenwand des Hauses handeln. Prinzipiell können jedoch beliebige weitere oder andere Merkmale in einem erfassten Objekt detektiert werden, beispielsweise über eine Kantendetektion oder Mustererkennung. Alternativ oder zusätzlich kann die Auswerteeinrichtung 28 eine Auswertung einer Abmessung von Kanten oder von Kanten eingeschlossener Flächen durchführen, etwa mittels Bildbearbeitung.

Fig. 5b zeigt eine mit der Fig. 3a vergleichbare Darstellung, bei der die optische Einrichtung 22 ausgebildet ist, um das Mehrfachbild 24 so zu erzeugen, dass dieses zwei Einzelbilder 26a und 26b aufweist. Die Einzelbilder 26a und 26b überlappen einander teilweise. Das bedeutet, dass die Einzelbilder 26a und 26b teilweise zueinander verschoben sind. Dadurch sind auch die vergleichbaren Merkmale der Einzelbilder 26a und 26b zueinander verschoben. Die Auswerteeinrichtung 28 kann ausgebildet sein, um eine relative Beziehung verschiedener Merkmale zueinander auszuwerten, selbst wenn diese miteinander überlappen. So kann beispielsweise das Merkmal 42b-1 des ersten Teilbildes 26a mit dem Merkmal 42a-2 des zweiten Teilbildes 26b überlappen. Dadurch, dass die Merkmale voneinander verschiedene Eigenschaften, d. h. Parameter, aufweisen, kann die Auswerteeinrichtung 28 ausgebildet sein, um die Merkmale basierend auf den Parametern zu unterscheiden.

Fig. 5c zeigt eine mit der Fig. 3b vergleichbare Situation, bei der die Merkmale der Einzelbilder 26a und 26b zueinander rotiert sind. Hat die Auswerteeinrichtung 28 Kenntnis von einem fehlerfreien Zustand, so kann die Auswerteeinrichtung 28 ausgebildet sein, um die relative Positionsänderung voneinander verschiedener Merkmale, etwa Fenster und Tür, in verschiedenen Einzelbildern 26a und 26b relativ zueinander auszuwerten. Alternativ oder zusätzlich kann die Auswerteeinrichtung 28 selbst bei Abwesenheit einer solchen Referenzinformation ausgebildet sein, um die relative Positionierung von gleichen oder zumindest ähnlichen Merkmalen, etwa wenn diese verwaschen sind, zu bestimmen.

Fig. 5d zeigt eine schematische Ansicht einer Bildverteilung der Objektverteilung gemäß Fig. 5a in einem Szenario, das mit der Fig. 4a vergleichbar ist. Auch hier überlappen die Gesamtobjekte miteinander, was auch zu einer Überlappung von verschiedenartigen oder auch gleichartigen Merkmalen miteinander führen kann.

Fig. 5e zeigt eine mit der Fig. 4b vergleichbare Darstellung, bei der die Einzelbilder 26a bis 26d zueinander rotiert sind. Die Auswerteeinrichtung 28 kann trotz der Überlappung der Merkmale ausgebildet sein, um die relative Änderung der Merkmale zueinander zu bestimmen, und um basierend darauf die Information bezüglich der Aberration zu bestimmen.

Gemäß einem Ausführungsbeispiel ist die optische Einrichtung ausgebildet, um die optische Projektion so zu beeinflussen, dass eine erste Art der Aberration eine erste, der ersten Art zugeordnete Veränderung eines Musters in dem Mehrfachbild 24 bewirkt, und dass eine zweite Art der Aberration 12 eine zweite, der zweiten Art zugeordnete Veränderung des Musters in dem Mehrfachbild bewirkt. Das Muster kann durch die Konfiguration der optischen Einrichtung 22 ganz oder teilweise bestimmt sein, etwa indem die optische Einrichtung 22 festlegt, entlang welcher Richtungen und mit welchem Abstand zueinander die Einzelbilder und somit die Merkmale der Einzelbilder in der Fokusebene angeordnet sind. Ferner kann das Muster dadurch beeinflusst sein, welche Anzahl von Teilbildern erzeugt wird. Beispielsweise zeigen die Fig. 3b, 4c, 5c und 5e jeweils das Auftreten einer Defokussierung, das bedeutet die Art der Aberration entspricht einer Defokussierung der optischen Projektion und die Änderung des Musters entspricht einer Rotation des Mehrfachbildes auf dem Bildsensor 12.

In anderen Worten kann die optische Einrichtung 22 ausgebildet sein, um die Amplitude und/oder die Phase der eintretenden Wellenfront so zu ändern/zu codieren, dass die aufgenommene Objektverteilung Doppel- bzw. Mehrfachbilder mit einer Anzahl N aufweist, das bedeutet, es wird das Mehrfachbild 24 erzeugt. Das bedeutet, ein Objektmerkmal, z. B. das Fenster 42a des Hauses in Fig. 5a ist in $N \geq 2$ Bildpositionen in dem von dem Bildsensor 14 erfassten Bild vorhanden. Die Objektmerkmale können getrennt zueinander sein, aber auch ganz oder teilweise überlappen, was eine deutliche Abgrenzung zu dem Shack-Hartmann-Ansatz bedeutet, wo die Bilder des Mikrolinsenarrays und somit sämtliche Objektmerkmale stets voneinander getrennt sind. Umfasst die optische Einrichtung 22 ein diffraktives Element, so kann ausschließlich die nullte Beugungsordnung des diffraktiven Elementes verwendet werden, um das Mehrfachbild 24 zu erzeugen. Alternativ oder zusätzlich können auch höhere Beugungsordnungen verwendet werden. Insbesondere die Nutzung der nullten Beugungsordnung des diffraktiven Elementes stellt einen Unterschied zu dem bekannten Phase Diversity Ansatz dar. Der Ansatz "Phase Diversity" kann zwei Ausprägungsformen annehmen. Ein angepasstes diffraktives Element kann gemäß einer ersten Ausprägung verwendet werden, um mehrere Bilder des Objektes jeweils in einer Beugungsordnung ungleich Null und in einer Bildebene zu erzeugen, wobei die Bilder jeweils unterschiedlich gut fokussiert sind. Gemäß einer zweiten Ausprägung können mithilfe von Strahlteilern mehrere Bilder des Objektes in unterschiedlichen Bildebenen mit unterschiedlichen Fokuseinstellungen erzeugt werden. In beiden Fällen wird aus einem Vergleich der Bildverwaschung auf die Wellenfrontaberration geschlossen. Jedoch ist dies nummerisch aufwendiger und weniger robust als der hier Beschriebene Ansatz des Vergleichens der Position der Merkmale der Mehrfachbilder.

Die so erreichte mehrfache Aufteilung des Objektmerkmals kann unter anderem durch folgende Parameter beschrieben werden: Ein Abstand $p_{ij}$ der Bildpositionen i und j des Merkmals ($i, j = 1,2, ..., N$), eine relative Intensität $I_i$ des Merkmals an verschiedenen Bildpositionen, ein Rotationswinkel $\theta_i$ des Merkmals an verschiedenen Bildpositionen und/oder eine relative Verbreiterung/Verwaschung ($R_i$, x, $r_{i,y}$) in x- und x-Richtung des Merkmals an den verschiedenen Bildpositionen. Bei einer idealen, d. h. flachen, Wellenfront, d. h. es tritt keine Aberration auf, sind diese Parameter beispielsweise durch die Parameter und die Geometrie der optischen Einrichtung, etwa eines diffraktiven Elementes, fest vorgegeben. Um die Genauigkeit der Bestimmung der Aberration zu erhöhen, können diese durch eine Messung ohne oder mit nur geringen Aberrationen kalibriert werden.

Eine Aberration der Wellenfront führt beispielsweise dazu, dass sich die bestimmten Parameter, abhängig von der Art der Aberration ändern. So kann eine Defokus-Aberration beispielsweise direkt den Rotationswinkel $\theta_i$ und/oder eine Koma-Aberration beispielsweise die Intensitäten $I_i$ und/oder eine Astigmatismus-Aberration beispielsweise die Abstände $p_{ij}$ ändern. Andere Aberrationen können zu einer komplexeren/gekoppelten bzw. verknüpften Änderung der Parameter führen, was durch die Ausgestaltung der optischen Einrichtung 22 beeinflusst werden kann.

Nachfolgende Ausführungen beziehen sich nun auf eine vorteilhafte Ausgestaltung der Auswerteeinrichtung 28 zur Bestimmung der unterschiedlichen Parameter. Gemäß Ausführungsbeispielen ist die Auswerteeinrichtung 28 ausgebildet, um ein komplexwertiges Cepstrum der optischen Projektion auf dem Bildsensor 14 zu bestimmen, d. h. zu berechnen, und um aus dem Cepstrum die Information bezüglich der Aberration zu bestimmen.

Das Cepstrum ist in der Literatur uneinheitlich definiert. Im Allgemeinen soll das Cepstrum so verstanden werden, dass eine Bildverteilung $i(x, y)$ auf dem Bildsensor und entlang der Bildrichtungen x und y in den Frequenzbereich transformiert wird. Hierfür ist die Auswerteeinrichtung 28 beispielsweise ausgebildet, um eine erste Transformationsoperation anzuwenden, etwa eine Fourier-Transformation, eine Laplace-Transformation oder eine andere geeignete Transformation, um eine Frequenzbereichsdarstellung zu erhalten.

Die Auswerteeinrichtung 28 ist ferner ausgebildet, um eine Verzerrungsfunktion auf die so erhaltene Frequenzbereichsdarstellung anzuwenden, etwa einen Logarithmus, um eine verzerrte Frequenzbereichsdarstellung zu erhalten. Basierend auf der Verzerrungsfunktion kann erreicht werden, dass geringwertige und hochwertige Anteile der Darstellung im Frequenzbereich relativ zueinander unterschiedlich gewichtet werden. Beispielsweise ist die Auswerteeinrichtung 28 ausgebildet, um einen Logarithmus anzuwenden, der geringwertige Anteile gegenüber hochwertigen Anteilen weniger dämpft oder gar verstärkt. Die Auswerteeinrichtung 28 kann ausgebildet sein, um den Logarithmus zu einer beliebigen Basis zu bilden, etwa 2, 3, 5 oder 10.

Ferner ist die Auswerteeinrichtung 28 konfiguriert, um eine zweite Transformationsoperation auf die verzerrte Frequenzbereichsdarstellung anzuwenden. Die zweite Transformationsoperation ist vorzugsweise invers zu der Frequenzbereichstransformation, also etwa eine inverse Fourier-Transformation oder eine inverse Laplace-Transformation. Zur Vermeidung oder Verhinderung von negativen Werten in den Operation kann die Auswerteeinrichtung 28 ferner ausgebildet sein, um einzelne Anteile oder Zwischenergebnisse zu quadrieren oder zumindest ein positives Vorzeichen derselben zu erhalten. Allgemein kann die Auswerteeinrichtung 28 ausgebildet sein, um das Cepstrum gemäß folgender Vorschrift zu berechnen:

$$C(x, y) = Transformation2(Verzerrung(Transformation1))$$

wobei C(x, y) das Cepstrum bezüglich der Bildrichtungen x und y bezeichnet

Gemäß einer konkreten Ausführungsform kann die Auswerteeinrichtung 28 ausgebildet sein, um das Cepstrum basierend auf der Vorschrift

$$C(x, y) = |FT^{-1}\{log_z|FT(i(x, y))|^2\}|^2$$

zu berechnen, wobei FT die Frequenzbereichstransformation und $FT^{-1}$ die inverse hiervon ist, $i(x, y)$ die Bildverteilung entlang der Bildrichtungen x und y bezeichnet, und wobei $log_z$ der Logarithmus zur Basis z ist, etwa 2, 3, 5.

Gemäß einer alternativen Ausführungsform kann die Auswerteeinrichtung 28 ausgebildet sein, um das Cepstrum basierend auf der Vorschrift

$$C(x, y) = |FT^{-1}\{log_{10}(|FT(i(x, y))|^2)\}|^2$$

zu berechnen. Obwohl die obigen Beispiele eine zweidimensionale Berechnung des Cepstrums beschreiben, kann auch eine Vielzahl von eindimensionalen Cepstren bestimmt und ausgewertet werden.

Aus einem Ergebnis der Cepstrum-Operation kann beispielsweise eine sogenannte Punktspreizfunktion (engl.: Point Spread Function - PSF) der optischen Projektion abgeleitet werden. Das Cepstrum kann Merkmale, etwa Extremwerte oder Peaks unterschiedlicher Ordnung aufweisen, aus denen auf die Form der PSF geschlossen werden kann oder die die Form der PSF vorgeben.

Die Cepstra $C(x, y)$ der Bildverteilung in Fig. 5b und Fig. 5c sind im folgenden (schematisch) gezeigt.

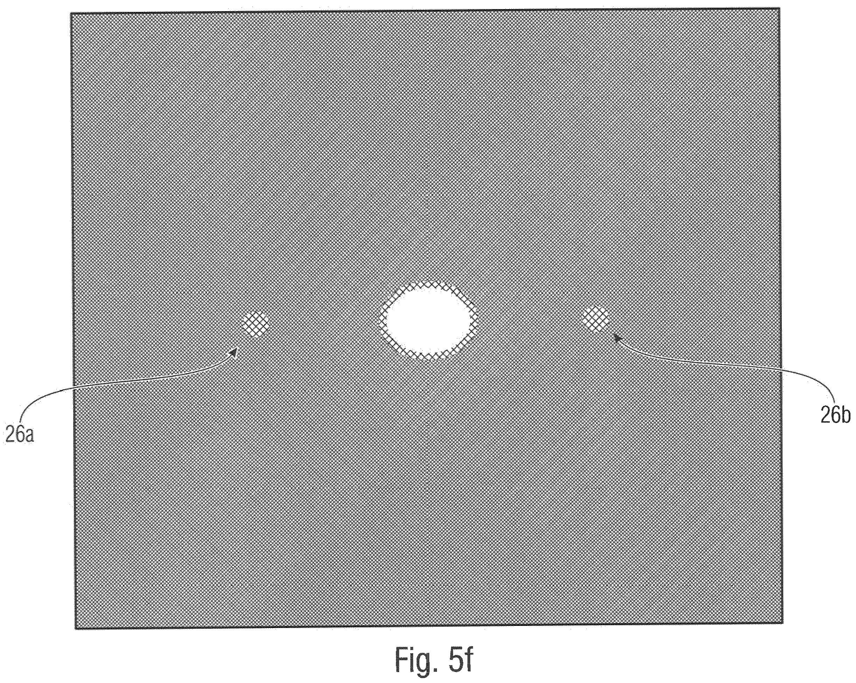

Fig. 5f zeigt eine schematische grafische Darstellung eines Cepstrums, das basierend auf der Bildverteilung von der Fig. 5b erhalten werden kann.

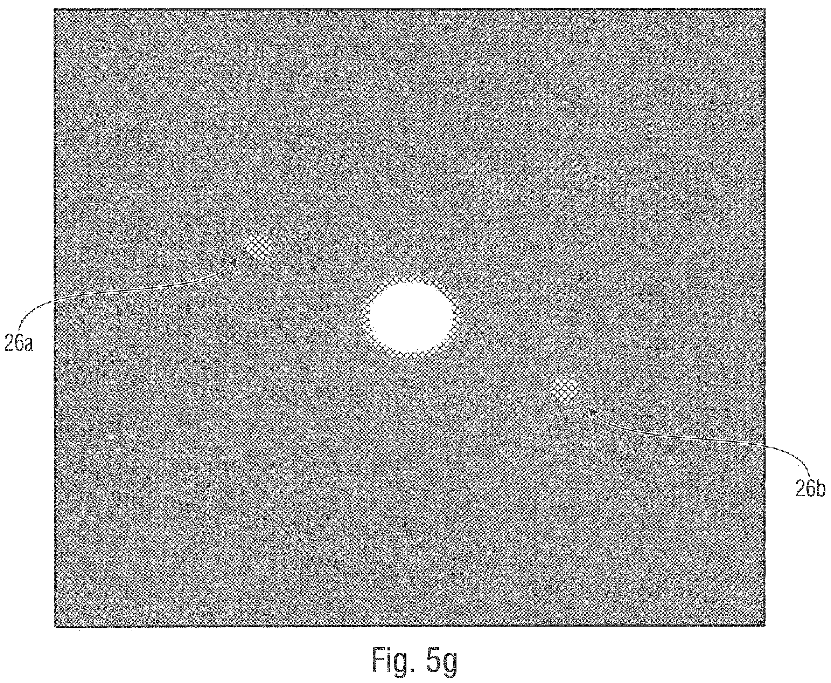

Fig. 5g zeigt eine schematische grafische Darstellung eines Cepstrums, das basierend auf der Bildverteilung von Fig. 5c erhalten werden kann. Zu beachten ist, dass die Graustufenwerte logarithmisch skaliert sind. Neben einem starken zentralen Maxima (0. Ordnung), weist das Cepstrum weitere Nebenmaxima unterschiedlicher, höherer Ordnung auf. Im allgemeinen treten bspw. $N(N - 1)$ Nebenmaxima erster Ordnung, $N(N - 1)$ Nebenmaxima zweiter Ordnung usw. auf, im vorliegenden Fall somit 2(2-1) = 2 Nebenmaxima pro Ordnung.

Das starke Zentrale Maxima liefert keine/wenig nutzbare(n) Informationen zur Aberrationsbestimmung. Die Nebenmaxima liefern hingegen Informationen, mit denen direkt/schnell auf die PSF und ferner auf die Aberrationen geschlossen werden kann. Bspw. entspricht der Rotationswinkel der Nebenmaxima genau der Rotation der PSF-Peaks bzw. der Merkmale in Fig. 5b und Fig. 5c. Bspw. entspricht der Abstand der Nebenmaxima erster Ordnung genau dem doppelten Abstand der PSF-Peaks bzw. der Merkmale in Fig. 5b und Fig. 5c. Durch die Detektion der Nebenmaxima in $C(x, y)$ kann also der Einfluss einer Aberration auf die Objektmerkmale (Rotation, Verzerrung, ...) bestimmt werden und im Umkehrschluss die Aberration selbst gemessen werden, insofern der Einfluss vorher bekannt ist (bspw. durch Kalibrierung).

Mit geeigneter Bildverarbeitung kann das Hauptmaxima nachträglich entfernt werden, um die Nebenmaxima besser detektieren zu können. Da die Intensität der Nebenmaxima mit höherer Ordnung stark abnimmt, kann ggf. eine robuste Detektion der Nebenmaxima bspw. nur für Nebenmaxima erster Ordnung möglich sein. So sind in Fig. 5f und Fig. 5g aufgrund der niedrigen Intensitäten der Nebenmaxima zweiter und höherer Ordnung bspw. nur Nebenmaxima erster Ordnung identifizierbar.

Die PSF kann auch als Impulsantwort des optischen Systems bezeichnet werden und ändert sich ggf. in Abhängigkeit der Aberration. Die PSF kann beispielsweise in einer Entfaltungsoperation aus den Inhalten der Fig. 3a bis 3d oder 4a bis 4d verwendet werden, um ein jeweiliges einzelnes Objekt, etwa das Haus gemäß Fig. 5a, zu erhalten. Die PSF kann zumindest zwei, d. h. $N \geq 2$ lokale Maxima aufweisen. Dies kann auch so verstanden werden, dass das Cepstrum $C(x, y)$ neben einem zentralen Hauptmaxima eine Anzahl von $K \leq N \cdot (N - 1)$ Nebenmaxima erster Ordnung aufweisen kann, die durch weitere Bildverarbeitung, etwa eine Spot Detection (Ortsauffindung), durch die Auswerteeinrichtung 28 mit geringem nummerischen Aufwand identifiziert werden können. Diese Nebenmaxima können umso besser identifiziert werden, je mehr Objektmerkmale in der Bildverteilung $i(x, y)$ aufgelöst werden können. Die Auswerteeinrichtung 28 kann ausgebildet sein, um die entsprechenden Parameter $p'_{iy}$, $I'_i$, $\theta'_i$ und/oder relative Verbreiterung/Verwaschung $r'_i$, x, $r'_{i,y}$ dieser Nebenmaxima in dem Cepstrum $C(x, y)$ zu bestimmen. Diese bestimmten Parameter können einen direkt proportionalen Zusammenhang mit den entsprechenden Parametern in der Bildverteilung $i(x, y)$ aufweisen, so dass eine Auswertung der Nebenmaxima des Cepstrums zu einem Ergebnis führt, welches proportional zu der Veränderung des Musters in der Bildverteilung ist.

Durch Berechnung des Cepstrums kann auf die Wellenfrontaberration der gesamten Bildverteilung $i(x, y)$, eines und/oder mehrerer Teilbildbereiche $i_k(x, y)$ geschlossen werden, d. h. diese können rekonstruiert werden. Durch die Auswertung mehrerer Teilbereiche $i_k(x, y)$ kann die Aberration oder mehrere Aberrationen somit auch in Abhängigkeit von der Objektposition, d. h. ortsaufgelöst bezüglich der Teilbereiche gemessen werden. Das bedeutet, bezüglich der Aberration 12 kann eine erste Information für einen ersten Teilbereich, eine zweite Information für einen zweiten Teilbereich, etc. bestimmt werden.

In anderen Worten kann durch eine geeignete mathematische Beschreibung der Wellenfrontaberration, etwa einer Entwicklung in geeignete Basisfunktionen, etwa ZernikeModen, der Einfluss der Amplitude jeder Basisfunktion oder Mode auf diese Parameter bestimmt werden. Dies kann experimentell oder theoretisch erfolgen. Die Berechnung/Bestimmung des Einflusses kann vor der eigentlichen Aberrationsmessung erfolgen. Ein praktisches Beispiele sieht wie folgt aus: Mit der Anordnung aus Element 16, 22, 14 und 28 wird in einem Schritt 1 ein vorzugsweise bekanntest Objekt (z. B. eine Punktquelle) beobachtet und nacheinander gezielt verschiedene bekannte Aberrationen 12 (z. B. Zernikemoden) eingebracht (bspw. durch einen deformierbaren Spiegel), d. h., es werden bestimmte Bildfehler eingebracht. Dies kann bspw. in einer Laborumgebung geschehen. Diese Aberrationen bilden dann die Basis für die Referenzinformation. Der jeweilige Einfluss auf die Parameter kann als Einflussmatrix gespeichert werden. Im Schritt 2 wird die Anordnung dann im eigentlichen Anwendungsszenario angewendet um unbekannte Aberrationen (bspw. atmosphärische Turbulenzen) mithilfe der vorher bestimmten Matrix zu bestimmen. Die Schritte 1 und 2 können in beliebiger Reihenfolge durchgeführt werden, insofern die Informationen über die Aberrationen nicht gleichzeitig zur Messung benötigt werden, was jedoch bspw. bei einem aktiven optischen System zur Wellenfrontkorrektur nötig ist. Wenn der Einfluss bekannt ist, kann im Umkehrschluss durch Messung der Parameter auf die Amplitude der einzelnen Basisfunktionen und damit die Form der Wellenfrontaberration geschlossen werden. Diese Information kann in Form einer Einflussmatrix und/oder inversen Einflussmatrix in der Auswerteeinrichtung 28 hinterlegt oder für diese in einem Speicher zugänglich hinterlegt sein. Die Parameter selbst können in der Bildverteilung $i(x, y)$ wie folgt gemessen werden: Es wird ggf. eine einzige elektronisch aufgenommene Bildverteilung $i(x, y)$ benötigt und beispielsweise durch die Auswerteeinrichtung 28, etwa einem PC, verarbeitet. Dabei wird das komplexe Cepstrum $C(x, y)$ der gesamten aufgenommenen Bildverteilung $i(x, y)$ oder eines oder mehrerer Teilbereiche $i_k(x, y)$ berechnet. Diese Berechnung kann mittels FFT-Algorithmen (FFT = Fast Fourier Transformation, schnelle Fourier-Transformation) sehr schnell durchgeführt werden, d. h. es sind lediglich geringe Berechnungszeiten erforderlich.

In Bezug auf die PSF bedeutet dies, dass durch die Veränderung des Cepstrums, welches beispielsweise als Grundlage für die PSF dient, die optische Einrichtung so ausgebildet sein kann, dass für unterschiedliche Arten der Aberration die PSF unterschiedliche Veränderungen erfährt. Verschiedenen Arten von Aberration können so verschiedene Einflüsse auf die PSF zugeordnet sein.

In anderen Worten kann die so aufgenommene, ausgedehnte Objektverteilung mehrere Merkmale aufweisen. Ein "Merkmal" kann hierzu z. B. das Fenster sein, welches durch den Einfluss des diffraktiven Elementes mehrfach in der Bildverteilung $i(x, y)$ auftritt. Fig. 5a zeigt beispielhaft die ausgedehnte Objektverteilung, Fig. 5b die Elementvariante *N* = 2 ohne Aberration, die Fig. 5c die Elementvariante *N* = 2 mit einer Defokus-Aberration, Fig. 5d die Elementvariante *N* = 4 ohne Aberration und Fig. 5e die Elementvariante *N* = 4 mit Defokus-Aberration.

Fig. 6 zeigt ein schematisches Blockschaltbild einer Vorrichtung 50 zur Messung einer Aberration. Verglichen mit der Vorrichtung 10 ist die optische Einrichtung 22 an einer dem Bildsensor 14 abgewandten Seite einer Linse 16a angeordnet. Die Linse 16a und ein Spiegel 16b sind Teil der Projektionsoptik. Das bedeutet, die optische Einrichtung 22 ist zwischen zwei Elementen 16a und 16b der Projektionsoptik angeordnet. Die optische Einrichtung 22 kann direkt mit der Abbildungslinse 16a verbunden sein. Ist die optische Einrichtung 22 beispielsweise ein diffraktives optisches Element oder umfasst die optische Einrichtung 22 beispielsweise ein diffraktives optisches Element, so kann dieses an einer Oberfläche der Linse 16a angeordnet sein. Dies kann auch so ausgeführt sein, dass die Abbildungslinse 16a und ein diffraktives optisches Element Teil der optischen Einrichtung 22 sind, während der Spiegel 16b Teil der Projektionsoptik 16 ist. Die Vorrichtung 50 kann auch weitere abbildende Elemente, etwa Linsen oder Spiegel, aufweisen, die Teil der Projektionsoptik 16 oder der optischen Einrichtung 22 sind sein können.

Die Vorrichtung 50 kann einen Speicher 44 umfassen, in welchem Referenzinformationen bezüglich der Aberration gespeichert sind. Die Referenzinformationen können beispielsweise in Form von Einflussinformationen gespeichert sein, die einen Einfluss einer jeweiligen Aberration auf ein auf dem Bildsensor 14 projiziertes Muster beschreiben. Alternativ oder zusätzlich kann der Speicher 44 eine inverse Einflussinformation umfassen, die eine Information darüber bereitstellt, welche Veränderungen an dem optischen System, d. h. der Vorrichtung 50 oder einem anderen System, das den Objektbereich 18 erfasst, vorzunehmen sind, um den Einfluss der Aberration zumindest teilweise zu reduzieren. Die Auswerteeinrichtung 28 kann ausgebildet sein, um eine Änderung eines Musters der Mehrfachbildes zu bestimmen, und um unter Verwendung der Referenzinformationen und der bestimmten Änderung des Musters die Information bezüglich der Aberration zu bestimmen. Das bedeutet, die bestimmte Anordnung und/oder Verformung der Einzelbilder des Mehrfachbildes kann mit den Informationen in dem Speicher 44 verglichen werden, um die Information bezüglich der Aberration zu bestimmen.

Die Auswerteeinrichtung 28 kann ausgebildet sein, um die Aberrationskorrektur numerisch durchzuführen, um eine korrigierte Bildverteilung zu erhalten. Das bedeutet, dass die Auswerteeinrichtung 28 ausgebildet sein kann, um ein rekonstruiertes Bild des Objektes zu erzeugen oder bereitzustellen. Hierfür kann die Auswerteeinrichtung 28 das Ausgangssignal 34 verwenden. Alternativ oder zusätzlich kann die Auswerteeinrichtung ausgebildet sein, um PSF Parameter zu bestimmen und um das aufgenommene Mehrfachbild mithilfe der PSF Parameter nummerisch zu entfalten und so ein dekodiertes (Einfach-) Bild mit reduzierten Aberrationseinfluss zu erhalten.

Fig. 6 verdeutlicht darüber hinaus eine von der Linse 16a oder 22a abgebildete Aperturebene 46, die durch eine Apertur 48 der Vorrichtung 50 zumindest teilweise beeinflusst ist. Die Linse 16a oder 22a kann somit der Abbildungsoptik 16 oder der optischen Einrichtung 22 zugeordnet sein. Bei der Apertur 48 kann es sich beispielsweise um eine variable oder fixe Blende handeln, die den Sichtbereich der Vorrichtung 50 begrenzt.

Fig. 7 zeigt ein schematisches Blockschaltbild einer Vorrichtung 60 zur Bestimmung einer Aberration. Die Vorrichtung 60 ist ausgebildet, um die Aperturebene 46 mittels einer Linse 52a in eine Ebene 54 abzubilden, von der aus eine Linse 52b ausgebildet ist, um die Ebene 54 auf den Bildsensor 14 zu projizieren. Die optische Einrichtung 22 kann in der Ebene 54 angeordnet sein, das bedeutet, dass die Aperturebene 46 in die Ebene 54 der optischen Einrichtung 22 abgebildet werden kann. Werden die Vorrichtungen 50 und 60 gegenübergestellt, so kann ausgehend von einer Objekt-/Zielverteilung die Wellenfront 36' auf das Abbildungs-/Beleuchtungssystem umfassend die Linse 16a und die Apertur 48 treffen. Hierbei kann die Wellenfront 36' Aberrationen aufweisen. Gemäß der Anordnung der Vorrichtung 50 kann die optische Einrichtung, etwa das diffraktive Element, direkt in der Aperturebene des Beobachtungs-Beleuchtungssystems, d. h. der Linse 16a, integriert sein. Gemäß der Anordnung der Vorrichtung 60 kann die Projektionsoptik mehrere Linsen 16a bis 16c umfassen. Die Aperturebene 46 kann durch das optische System 52a in die Ebene 54 abgebildet werden, in der das diffraktive Element integriert ist. Vereinfacht ausgedrückt kann eine Linse 16a eine Fokussierung vornehmen. Eine Linse 16b kann eine Kollimation und eine Linse 16c eine anschließende Fokussierung durchführen. Dies kann auch so verstanden werden, dass ein Pupillenbereich zwischen den Linsen 16b und 16c durch den kollimierten Strahlengang dazwischen ausgedehnt werden kann, was eine Positionierung der optischen Einrichtung 22 in dem Pupillenbereich vereinfacht. In anderen Worten ist der Pupillenbereich zwischen den Linsen 16b und 16c im Wesentlichen unverändert.

In beiden Ausführungsvarianten der Vorrichtungen 50 und 60 ist die optische Einrichtung 22 beispielsweise in Transmissionskonfiguration ausgebildet. Gemäß weiteren Ausführungsbeispielen kann das diffraktive Element bzw. die optische Einrichtung 22 auch eine reflektierende Eigenschaft aufweisen, das bedeutet, der Bildsensor 14 und die Aperturebene 46 sind auf derselben Seite der optischen Einrichtung 22 angeordnet.

Vorteilhaft daran ist, dass eine Verzerrung oder Beeinflussung der Abbildung durch das diffraktive Element bzw. der optischen Einrichtung 22 gering ist, dass eine Eindringtiefe in ein reflektierendes Element geringer ausgeführt sein kann, als durch ein transmittierendes Element hindurch, d. h. eine Beeinflussung der Abbildung durch das Material kann geringer sein.

Bei der optischen Einrichtung 22 kann es sich beispielsweise um eins separates/eigenständiges Modul und/oder um eine Struktur handeln, die direkt in oder auf einem Abbildungselement, wie etwa einer Linse, einem Spiegel oder dergleichen integriert ist.

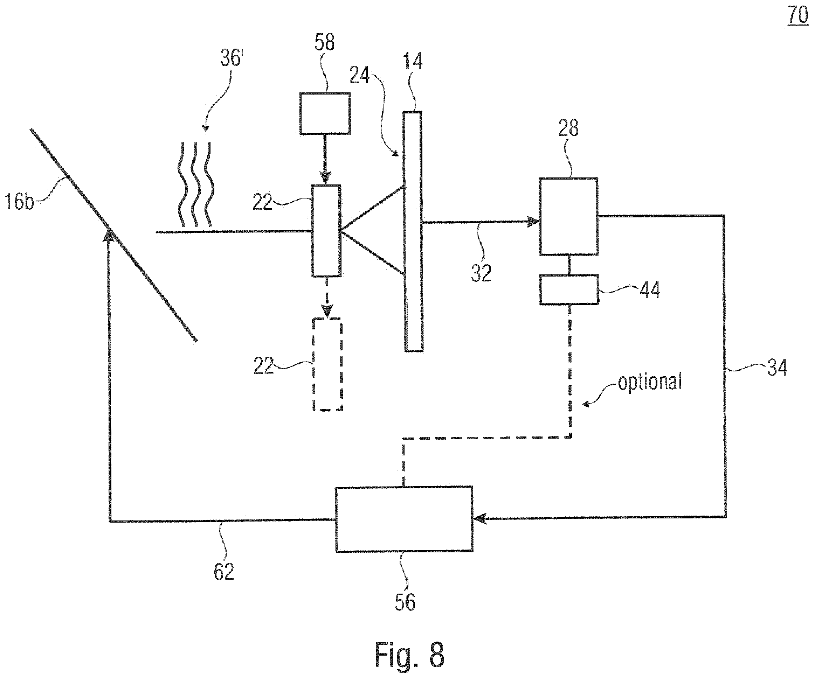

Fig. 8 zeigt ein schematisches Blockschaltbild eines Abbildungssystems 70 umfassend eine Vorrichtung zur Messung einer Aberration. Die Vorrichtung zur Messung der Aberration umfasst eine Projektionsoptik 16b in Form eines Umlenkspiegels. Diese kann, verglichen mit der Vorrichtung 10, alternativ zu der als Linse ausgeführten Projektionsoptik 16 ausgeführt sein. Optional kann das Abbildungssystem 70 auch weitere optische Elemente als Teil der Projektionsoptik umfassen.

Das Abbildungssystem 70 umfasst eine Einstelleinrichtung, die ausgebildet ist, um die Projektionsoptik unter Verwendung der Information bezüglich der Aberration so einzustellen, dass ein Einfluss der Aberration auf die Projektion auf dem Bildsensor 14 gegenüber einem von der Vorrichtung zur Erfassung der Aberration erfassten Zustand reduziert ist. Hierfür kann die Einstelleinrichtung 56 beispielsweise das Signal 34 von der Auswerteeinrichtung 28 empfangen. Beispielsweise kann die Vorrichtung zur Messung der Aberration einen von der Aberration 12 beeinflussten Zustand des Abbildungssystems 70 erfassen, etwa unter Verwendung der Referenzinformation, die in dem Speicher 44 hinterlegt ist.

Die Einstelleinrichtung 56 kann ausgebildet sein, um zumindest eine optische Eigenschaft der Projektionsoptik zu verändern, um den Einfluss der Aberration 12 zu verringern. Hierfür kann die Einstelleinrichtung 56 ein elektrisches oder thermisches oder optisches Ansteuersignal 62 bereitstellen, um beispielsweise eine Position entlang/senkrecht des Strahlengangs, einen Reflexionsgrad, einen Transmissionsgrad, eine Oberflächenkrümmung oder dergleichen der Projektionsoptik zu verändern. Alternativ oder zusätzlich kann eine beliebige Eigenschaft und/oder die gesamte Oberfläche verändert werden. Bspw. kann ein deformierbarer Spiegel mit lateral verteilten Aktoren eingesetzt werden, wodurch die Oberflächenkrümmung lokal variiert werden kann. Alternativ oder zusätzlich kann der lokale Phasenversatz der Optik, bspw. eines "spatial-light-modulators" (örtlicher Lichtmodulator) variiert werden.

Ein Bewertungsmaß für die Verbesserung der Abbildung kann beispielsweise das Strehl-Verhältnis bzw. die Strehl-Zahl S bereitstellen. Wenn die Projektionsoptik Linsen umfasst, so kann die Einstelleinrichtung 56 ausgebildet sein, um eine Position, eine Brennweite oder eine sonstige Eigenschaft der Linse zu ändern, um den Einfluss der Aberration 12 zu verringern.

Vereinfacht ausgedrückt kann das Abbildungssystem 70 ausgebildet sein, um in einem ersten Schritt den Einfluss der Aberration zu bestimmen, etwa in Form einer Korrekturaufnahme. In einem darauffolgenden zweiten Schritt kann das Abbildungssystem 70 ausgebildet sein, um den Objektbereich erneut und mit einem verringerten Einfluss der Aberration 12 auf den Bildsensor 14 zu projizieren. Hierfür kann das Abbildungssystem 70 eine Steuereinrichtung 58 umfassen, die ausgebildet ist, um die optische Einrichtung 22 zu steuern.

Die Steuerung kann so erfolgen, dass die optische Einrichtung 22 in dem ersten Zeitintervall, während dem die Korrekturaufnahme erfasst wird, angeordnet ist, um die optische Projektion auf den Bildsensor 14 so zu beeinflussen, dass auf dem Bildsensor 14 das Mehrfachbild entsteht. In einem zweiten Zeitintervall, währenddessen der Objektbereich mit verringertem Einfluss der Aberration 12 auf den Bildsensor 14 projiziert werden soll, kann die Steuereinrichtung 58 ausgebildet sein, um die optische Einrichtung 22 so zu beeinflussen, dass die optische Projektion auf den Bildsensor 14 durch die optische Einrichtung 22 zumindest in einem geringeren Umfang beeinflusst ist. Hierfür kann die Steuereinrichtung 58 beispielsweise ausgebildet sein, um die optische Einrichtung 22 aus einem Strahlengang zwischen dem Objektbereich und dem Bildsensor 14 herauszubewegen, wie es durch die gestrichelten Linien angedeutet ist. Beispielsweise kann die Steuereinrichtung 58 einen Aktuator (Stellglied) umfassen oder diesen ansteuern, wobei der Aktuator ausgebildet ist, um die optische Einrichtung 22 aus dem Strahlengang herauszubewegen. Alternativ oder zusätzlich kann die Steuereinrichtung 58 ausgebildet sein, um zumindest eine optische Eigenschaft der optischen Einrichtung 22 zu beeinflussen. Beispielsweise kann die Steuereinrichtung 58 ausgebildet sein, um die optische Einrichtung 22 mittels elektrischer oder thermischer Aktuatorik so anzusteuern, dass diese einen verglichen mit der Korrekturaufnahme erhöhten Reflexionsgrad aufweist und/oder kein Mehrfachbild erzeugt.

Optional kann die Einstelleinrichtung 56 mit dem Speicher 44 verbunden sein, um aus der Referenzinformation das Ansteuersignal 62 abzuleiten, das bedeutet, eine Information darüber bereitzustellen, mit welchen Maßnahmen der Beeinflussung der optischen Projektionsoptik 16b der Einfluss der Aberration reduzierbar ist.

Gemäß einer vorteilhaften Weiterbildung kann die Einstelleinrichtung 56 ausgebildet sein, um die Projektionsoptik ortsaufgelöst einzustellen, etwa durch unterschiedliche Beeinflussung oder lediglich teilweise Beeinflussung an selektiven Orten der Projektionsoptik. Hierbei kann beispielsweise ein deformierbarer oder verformbarer Spiegel ortsselektiv deformiert werden und/oder eine Transmissionseigenschaft ortsselektiv beeinflusst werden. Dies ist vorteilhaft, da der Einfluss der Aberration ortsselektiv reduziert werden kann, und so eine globale hohe Abbildungsqualität erhalten werden kann. Aberrationen können bspw. zu einer Änderung der Ausbreitungsrichtung der Wellenfront 36 und deshalb ferner zu einem Versatz des Gesamtbildes in der Bildebene führen, wodurch bspw. einzelne Teilbereiche nicht mehr vom Detektor 14 erfasst werden. Mithilfe eines Kippspiegels (Tip/Tilt-Spiegel) kann die Ausbreitungsrichtung der Wellenfront 36 verändern werden, indem der Spiegel durch aktive Stellelemente relativ zur Einfallsrichtung der Wellenfront 36' gekippt wird. Dadurch kann die absolute Position des (Mehrfach-) Bildes auf dem Detektor 14 eingestellt werden und so diesem Effekt entgegengewirkt werden.

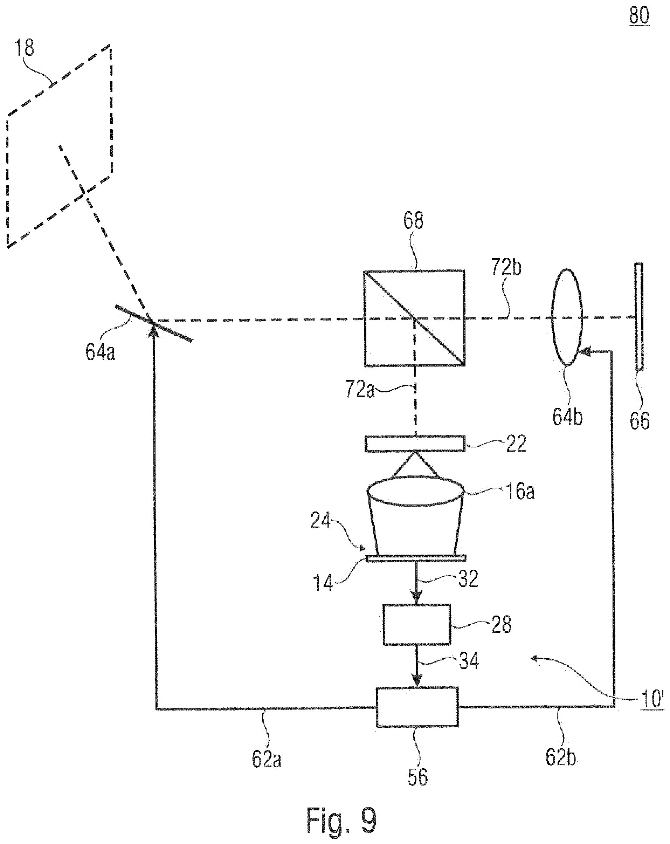

Fig. 9 zeigt eine schematisches Blockschaltbild eines Abbildungssystems 80 umfassend eine Vorrichtung 10' zur Messung der Aberration. Die Vorrichtung 10' kann im Wesentlichen identisch zu der Vorrichtung 10 aufgebaut sein. Beispielsweise kann jedoch die optische Einrichtung 22 auf einer dem Bildsensor 14 abgewandten Seite der Projektionsoptik 16a angeordnet sein. Alternativ könnte auch die Vorrichtung 10 angeordnet sein. Alternativ kann das Abbildungssystem 80 auch die Vorrichtung 50 oder 60 umfassen. Das Abbildungssystem 80 umfasst ferner eine weitere Projektionsoptik umfassend einen Umlenkspiegel 64a und eine Linse 64b, wobei Teile der weiteren Projektionsoptik, etwa der Umlenkspiegel 64a auch der Projektionsoptik 16 zugeordnet sein können. Der Umlenkspiegel 64a kann beispielsweise der Umlenkspiegel 16b des Abbildungssystems 70 sein. Die Linse 64b kann ausgebildet sein, um den von dem Objektbereich 18 empfangenen Strahlengang auf einen weiteren Bildsensor 66 zu projizieren.

Das Abbildungssystem 80 kann ein strahlteilendes Element 68 umfassen, das ausgebildet ist, um den von dem Objektbereich 18 empfangenen Strahlengang zu teilen, so dass ein erster Anteil 72a hin zu der Vorrichtung 10' und ein weiterer Anteil 72b hin zu dem Bildsensor 66 gelenkt wird. Das strahlteilende Element 68 ist bspw. konfiguriert, um den ersten Anteil 72a und den zweiten Anteil 72b so bereitzustellen, dass die Projektion auf die Bildsensoren 14 und 66 denselben optischen Ursprung, nämlich den Objektbereich 18, aufweisen. Vereinfacht ausgedrückt bedeutet dies, dass der Objektbereich 18 einmal als Mehrfachbild 24 auf den Bildsensor 14 und einmal in vorzugsweise korrigierter Form auf den Bildsensor 66 abgebildet wird. Bei dem strahlteilenden Element kann es sich beispielsweise um einen Strahlteilerwürfel oder ein Prisma handeln.

Das Abbildungssystem 80 umfasst die Einstelleinrichtung 56, die ausgebildet ist, um basierend auf einem ersten Ansteuersignal 62a den Umlenkspiegel 64a und basierend auf einem zweiten Ansteuersignal 62b die Linse 64b so einzustellen, dass ein Einfluss der Aberration auf die Projektion auf dem Bildsensor 66 gegenüber einem Zustand, wie er von der Vorrichtung 10' erfasst wird, reduziert ist. Alternativ kann lediglich der Spiegel 64a oder die Linse 64b angeordnet sein. Alternativ kann die Einstelleinrichtung 56 ausgebildet sein, um lediglich eines der Elemente des Spiegels 64a und der Linse 64b einzustellen. Alternativ kann die Abbildungsoptik auch weitere Elemente aufweisen, die optional von der Einstelleinrichtung 56 bezüglich ihrer optischen Eigenschaft beeinflussbar sind. Das bedeutet, dass die Einstelleinrichtung 56 ausgebildet sein kann, um lediglich eins aber auch eine höhere Anzahl von optischen Elementen der Projektionsoptik des Abbildungssystems 80 einzustellen.

Basierend auf der Kenntnis, welche Änderung des Musters in dem Mehrfachbild 24 durch welche Aberration hervorgerufen wird, kann die Einstelleinrichtung 56 kontinuierlich und ggf. in Echtzeit, d. h. zwischen zwei Aufnahmen des Abbildungssystems 80 auf den Bildsensor 66, den Einfluss der Aberration auf die Projektion auf den Bildsensor 66 reduzieren oder gering halten. Trotz des höheren hardwaretechnischen Aufwandes bezogen auf das Abbildungssystem 70, kann so erreicht werden, dass die Aufnahmen auf den Bildsensor 14 und den Bildsensor 66 mit einem geringen zeitlichen Versatz zueinander, in dem Maße, wie eine Rechenzeit zum Berechnen des Einflusses der Aberration 12 und zum Ansteuern der optischen Elemente benötigt wird, erfasst werden können.

Prinzipiell können die bestimmten Auswirkungen der Aberration 12 für eine nächste Aufnahme verwendet werden, um diese gegenüber dem beeinflussten Zustand zu verbessern oder es kann eine Nachbearbeitung der aktuellen Aufnahme erfolgen, etwa unter Berücksichtigung, welche Abbildungsfehler auf dem Bildsensor hervorgerufen wurden.

Vereinfacht ausgedrückt, kann von einer Vorrichtung 10, 10', 50 oder 60 die Information bezüglich der Aberration erhalten und so verwendet werden, dass der Einfluss der Aberration reduziert ist.

Obwohl in vorangehend beschriebenen Ausführungsbeispielen die Auswerteeinrichtung 28, die Einstelleinrichtung 56 und die Steuereinrichtung 58 als voneinander getrennte Elemente dargestellt sind, kann zumindest ein erstes Element und ein zweites Element hiervon als gemeinsame Einrichtung ausgeführt sein, etwa in Form eines Mikroprozessors, eines FPGA (Field Programmable Gate Array; Feldprogrammierbares Gatterarray), CPU oder dergleichen.

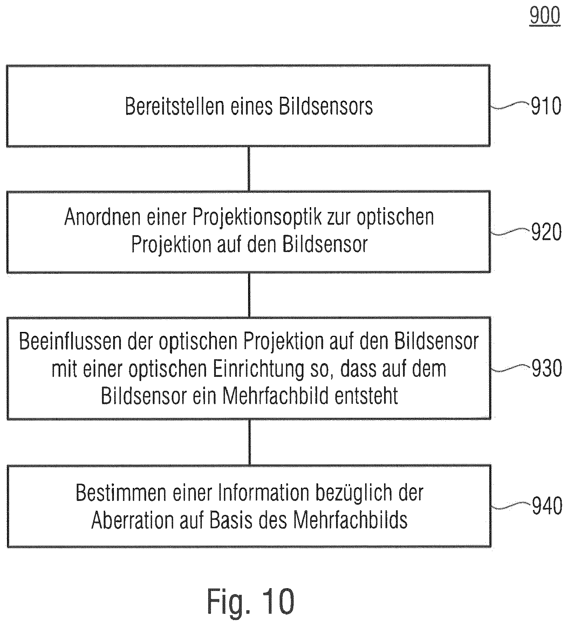

Fig. 10 zeigt ein schematisches Flussdiagramm eines Verfahrens 900 zum Messen einer Aberration. In einem Schritt 910 erfolgt ein Bereitstellen eines Bildsensors, etwa des Bildsensors 14. In einem Schritt 920 erfolgt ein Anordnen einer Projektionsoptik zur optischen Projektion auf den Bildsensor. Hierbei kann es sich beispielsweise um die Projektionsoptik 16 handeln. In einem Schritt 930 erfolgt ein Beeinflussen der optischen Projektion auf den Bildsensor mit einer optischen Einrichtung so, dass auf dem Bildsensor ein Mehrfachbild entsteht. In einem Schritt 940 erfolgt ein Bestimmen einer Information bezüglich der Aberration auf Basis des Mehrfachbildes.

Vorangehend beschriebene Ausführungsbeispiele beschreiben ein vorteilhaftes Verfahren zum Bestimmen einer Aberration sowie eine Möglichkeit, deren Einfluss in einem Abbildungssystem zu reduzieren.

In anderen Worten können die Wellenfrontaberrationen der Atmosphäre und/oder eines optischen Systems gemessen werden, um schließlich mithilfe aktiver optischer Elemente die Abbildungs-/Beleuchtungsqualität des optischen Systems zu verbessern, etwa das Strehl-Verhältnis zu erhöhen. Die Vorteile bestehen unter anderem darin, dass keine aktive Beleuchtung des Objekts oder Ziels benötigt wird. Ferner kann ein ausgedehntes Ziel oder Objekt, insbesondere ein ausgedehnter Objektbereich oder eine ausgedehntes Szene genutzt werden, d. h., es ist keine Punktquelle nötig. Für die Auswertung des Bildsensors ist lediglich ein Bildsensor erforderlich. Ferner ist nur eine Bildaufnahme pro Messung zur Bereitstellung der Information bezüglich der Aberration erforderlich. Durch eine hohe Objektabtastung, da keine Verkleinerung der Bildverteilung zusätzlich zum Abbildungs-/Beleuchtungssystem, etwa der Projektionsoptik 16, notwendig ist, können die Objektmerkmale hochaufgelöst abgebildet werden, was zu einer robusten Messung der Aberration führt. Vorangehend beschriebene Ausführungsbeispiele ermöglichen ferner eine nummerische effiziente Messung, da keine iterativen Optimierungsschritte notwendig sind und auch schnelle Algorithmen verwendbar sind, etwa FFT-Algorithmen. Die Aberrationen können für verschiedene Objektbereiche ortsaufgelöst bestimmt werden.

Alternativ zur vorangehend beschriebenen Ausführungsbeispielen kann die optische Einrichtung 22 ein oder mehrere diffraktive Elemente aufweisen. Die diffraktiven Elemente können mehrfach, an voneinander verschiedenen Positionen im optischen Strahlengang positioniert werden. Das bedeutet, dass die Einprägung optischer Eigenschaften auf das Mehrfachbild auch durch mehrere diffraktive Elemente erfolgen kann. Anstelle von diffraktiven Elementen können aber auch andere, ggf. einfachere, optische Elemente angeordnet werden, um das Mehrfachbild zu erzeugen. Eine einfache Anordnung kann auf zumindes zwei, d.h. $M \geq 2$ Prismen beruhen, die insgesamt N verschiedene Winkel aufweisen, wobei gilt $M \geq N$. Dadurch können auch N Teilbilder des Mehrfachbildes mit ähnlichen Eigenschaften erzeugt werden, wobei das bereits aufgeführte Beispiel des Prismas in Kombination mit einer flachen Glasfläche ein Spezialfall sein kann. Anstatt Prismen, können auch M unterschiedlich gekippte Spiegel verwendet werden. Beispielsweise können mithilfe eines Prismas in Kombination mit einer flachen Glasfläche zumindest ähnliche Effekte erzeugt werden. Obwohl vorangehend beschriebene Ausführungsbeispiele so beschrieben sind, dass die Auswerteeinrichtung 28 ausgebildet ist, um ein Cepstrum zu berechnen, so kann gemäß alternativen Ausführungsbeispielen auch eine Autokorrelation berechnet werden, die zwar zu ggf. schwer identifizierbaren Nebenmaxima führt, jedoch eine einfachere Berechnungsvorschrift erlaubt.

Beim des Phase-Diversity-Ansatz wird jedes Teilbild durch die gesamte Wellenfront erzeugt, wohingegen bei Ausführungsbeispielen mindestens zwei der N Teilbilder durch jeweils unterschiedliche Bereiche der Wellenfront erzeugt werden. Bei einem bekannten Konzept, das in US 8,517,535 B2 beschrieben ist, werden die Teilbilder durch unterschiedliche Beugungsordnungen es diffraktiven Elementes erzeugt. Bei einer zweiten Realisierung des Phase-Diversity-Ansatzes, der in US 7,531,774 B2 beschrieben ist, werden die Teilbilder in unterschiedlichen Bildebenen durch einen Strahlteiler erzeugt. Gemäß hierin beschriebenen Ausführungsbeispielen werden die Teilbilder im Gegensatz hierzu durch eine Aufteilung der Wellenfront in Kombination mit einer Änderung der jeweiligen Ausbreitungsrichtung erreicht.

Obige Ausführungsbeispiele machen deutlich, dass im Gegensatz zum Phase Diversity Ansatz, wo ein Einfluss einer Aberration auf verschiedene Fokuseinstellungen bzw. Bildebenen analysiert wird, um die Aberration zu messen, gemäß hierin beschriebenen Ausführungsbeispielen der Einfluss einer Aberration auf verschiedene Teilbereiche der optischen Einrichtung analysiert wird. Dabei können ggf. alle Teilbereiche dieselbe Fokussierung aufweisen. Ferner ändert sich unter Verweis auf die Fig. 3 und 4 beim Phase-Diversity-Ansatz nur die Form/Größe der Verwaschung beim Auftreten einer Aberration, während sich bei Ausführungsbeispielen zusätzlich die Position der Teilbilder/Merkmale ändert, wodurch die Aberrationsmessung robuster und schneller durchgeführt werden kann. Das bedeutet, dass die optische Einrichtung ausgebildet ist, um das Mehrfachbild so zu erzeugen, dass eine Position eines Teilbilds in dem Mehrfachbild von der Aberration beeinflusst ist.

Ein bekannter klassischer Shack-Hartmann Sensor nutzt lediglich ein Mikrolinsenarray und keine Kombination aus Projektionsoptik und optischer Einrichtung. In einer weiteren Ausgestaltung, die bspw. in EP 1 983 318 A1 beschrieben ist, wird hingegen das Mikrolinsenarray in Kombination mit einer Projektionsoptik verwendet. Jedoch wird bei dieser Ausführungsform kein Mehrfachbild der Objektverteilung erzeugt, da jeder Objektpunkt nur von genauer einer Mikrolinse gesehen wird und somit nur einmal auf dem Bildsensor vorhanden ist.

Vorangehend beschriebene Ausführungsbeispiele können beispielsweise für hochaufgelöste erdgebundene, optische Weltraumbeobachtung eingesetzt werden. Im Speziellen kann es sich hierbei um eine Sonnenbeobachtung handeln. Alternativ oder zusätzlich können hierin beschriebene Ausführungsbeispiele für eine Erdbeobachtung durch Satelliten, Flugzeuge, Drohnen oder dergleichen einsetzbar sein. Weitere Anwendungen sind in der optischen Freiraumkommunikation, in der optischen Materialbearbeitung, etwa mit Lasern oder Hochleistungslasern, bei Netzhautuntersuchungen, Refraktometer, d. h. Bestimmung der Aberration des Auges, allgemein optischen Beobachtungen mit Ferngläsern und/oder Nachtsichtgeräten, oder Justagen und Evaluierung der Qualität von optischen Systemen gegeben.

Gemäß einem ersten Aspekt weist eine Vorrichtung 10; 50; 60 zur Messung einer Aberration 12 folgende Merkmale auf: einen Bildsensor 14; eine Projektionsoptik 16 zur optischen Projektion auf den Bildsensor 14; eine optische Einrichtung 22 zur Beeinflussung der optischen Projektion auf den Bildsensor 14 so, dass auf dem Bildsensor 14 ein Mehrfachbild 24 aus einer Mehrzahl von Teilbildern 26a-d entsteht, wobei die optische Einrichtung 22 zumindest einen Bereich 74a-d; 82a-d pro Teilbild 26a-d aufweist, wobei die Bereiche 74a-d; 82a-d unterschiedliche laterale Abschnitte einer auf die Projektionsoptik einfallenden Wellenfront 36' unterschiedlich beeinflussen; eine Auswerteeinrichtung 28, die ausgebildet ist, um auf Basis des Mehrfachbildes 24 eine Information bezüglich der Aberration 12 zu bestimmen.

Gemäß einem zweiten Aspekt unter Bezugnahme auf den ersten Aspekt sind die Bereiche 74a-d; 82a-d in einem Pupillenbereich der Projektionsoptik 16 angeordnet.

Gemäß einem dritten Aspekt unter Bezugnahme auf zumindest einen des ersten und zweiten Aspekts ist die optische Einrichtung 22 so ausgebildet, dass eine PSF der optischen Projektion zumindest zwei lokale Maxima aufweist.

Gemäß einem vierten Aspekt unter Bezugnahme auf den dritten Aspekt ist die optische Einrichtung 22 so ausgebildet, dass für unterschiedliche Arten der Aberration 12 die PSF unterschiedliche Veränderungen erfährt.

Gemäß einem fünften Aspekt unter Bezugnahme auf zumindest einen des ersten bis vierten Aspekts bezieht sich die Information bezüglich der Aberration 12 auf zumindest eines aus einer Defokussierung der optischen Projektion, einer Koma-Aberration der optischen Projektion und einem Astigmatismus der optischen Projektion.

Gemäß einem sechsten Aspekt unter Bezugnahme auf zumindest einen des ersten bis fünften Aspekts ist die Auswerteeinrichtung 28 ausgebildet, um ein Cepstrum der optischen Projektion zu berechnen, und um aus dem Cepstrum die Information bezüglich der Aberration 12 zu bestimmen.

Gemäß einem siebten Aspekt unter Bezugnahme auf den sechsten Aspekt ist die Auswerteeinrichtung 28 ausgebildet, um Parameter von Nebenmaxima des Cepstrums zu bestimmen, und die Information bezüglich der Aberration 12 basierend auf den Parameter zu bestimmen.

Gemäß einem achten Aspekt unter Bezugnahme auf zumindest einen des ersten bis siebten Aspekts umfasst die optische Einrichtung 22 ein diffraktives optisches Element.

Gemäß einem neunten Aspekt unter Bezugnahme auf den achten Aspekt umfasst die optische Einrichtung 22 eine Abbildungslinse 22a zum Projizieren der optischen Projektion auf den Bildsensor 14 und das diffraktive optisches Element ist an der Abbildungslinse 22a angeordnet.

Gemäß einem zehnten Aspekt unter Bezugnahme auf zumindest einen des ersten bis neunten Aspekts weist das Mehrfachbild 24 eine Mehrzahl von Einzelbildern 26a-d auf, wobei sich die Mehrzahl von Einzelbildern 26a-d teilweise überlappen.

Gemäß einem elften Aspekt unter Bezugnahme auf zumindest einen des ersten bis zehnten Aspekts umfasst das Mehrfachbild 24 eine Mehrzahl von Teilbildern 26a-d, und die gemeinsame Fokussierung ist ein Fokus der Projektionsoptik, der für jedes der Mehrzahl von Teilbildern wirksam ist.

Es versteht sich, dass die in den vorangegangenen Aspekten beschriebenen Ausführungsbeispiele mit den jeweiligen Gegenständen der nachfolgenden Patentansprüche kombiniert werden können.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (10; 50; 60) zur Messung einer Aberration (12), mit:

   einem Bildsensor (14);
   einer Projektionsoptik (16) zur optischen Projektion auf den Bildsensor (14);
   einer optischen Einrichtung (22) zur Beeinflussung der optischen Projektion auf den Bildsensor (14) so, dass auf dem Bildsensor (14) ein Mehrfachbild (24) aus einer Mehrzahl von Teilbildern (26a-d) entsteht, wobei die optische Einrichtung (22) zumindest einen Bereich (74a-d; 82a-d) pro Teilbild (26a-d) aufweist, wobei die Bereiche (74a-d; 82a-d) unterschiedliche laterale Abschnitte einer auf die Projektionsoptik einfallenden Wellenfront (36') unterschiedlich beeinflussen;
   einer Auswerteeinrichtung (28), die ausgebildet ist, um auf Basis des Mehrfachbildes (24) eine Information bezüglich der Aberration (12) zu bestimmen.

2. Vorrichtung gemäß Anspruch 1, bei der die Auswerteeinrichtung (28) ausgebildet ist, um das Mehrfachbild (24) unter Anwendung einer Mustererkennung auszuwerten, und um basierend auf der Mustererkennung die Information bezüglich der Aberration (12) zu bestimmen.

3. Vorrichtung gemäß Anspruch 2, bei der die optische Einrichtung (22) ausgebildet ist, um die optische Projektion so zu beeinflussen, dass eine erste Art der Aberration (12) eine erste, der ersten Art zugeordnete Veränderung eines Musters in dem Mehrfachbild (24) bewirkt und dass eine zweite Art der Aberration (12) eine zweite, der zweiten Art zugeordnete Veränderung des Musters in dem Mehrfachbild (24) bewirkt.

4. Vorrichtung gemäß Anspruch 3, bei der die optische Einrichtung (22) so ausgebildet ist, dass bei einer Defokussierung der optischen Projektion eine Rotation des Mehrfachbildes (24) auf dem Bildsensor (14) erfolgt.

5. Vorrichtung gemäß einem der vorangehenden Ansprüche, wobei die optische Einrichtung (22) ausgebildet ist, um das Mehrfachbild (24) so zu erzeugen, dass eine Position eines Teilbilds (26a-d) in dem Mehrfachbild (24) von der Aberration beeinflusst ist.

6. Vorrichtung gemäß einem der vorangehenden Ansprüche, bei der die Auswerteeinrichtung (28) ausgebildet ist, um eine erste Information bezüglich der Aberration (12) für zumindest einen ersten Teilbereich und um eine zweite Information bezüglich der Aberration (12) für zumindest einen zweiten Teilbereich des Mehrfachbildes (24) zu bestimmen.

7. Vorrichtung gemäß einem der vorangehenden Ansprüche, bei der die Auswerteeinrichtung (28) ausgebildet ist, um zumindest eines aus
einem Abstand ($p$, $p^*$) zwischen einer Position eines Merkmals in einer ersten Abbildung (26a) des Mehrfachbildes (24) und einer Position des Merkmals in einer zweiten Abbildung (26b) des Mehrfachbildes (24);
einen Intensitätsunterschied des Merkmals in der ersten Abbildung (26a) und in der zweiten Abbildung (26b);
einen Rotationswinkel ($\Theta$), um den das Merkmal in der ersten und/oder zweiten Abbildung (26a, 26b) gegenüber einer Position bei einer Abwesenheit der Aberration (12) rotiert ist; und
einer relativen Verzerrung des Merkmals in der ersten und zweiten Abbildung (26a, 26b);
auszuwerten.

8. Vorrichtung gemäß einem der vorangehenden Ansprüche, die einen Speicher (44) aufweist, in welchem Referenzinformationen bezüglich der Aberration (12) gespeichert sind;
wobei die Auswerteeinrichtung (28) ausgebildet ist, um eine Änderung eines Musters des Mehrfachbildes (24) zu bestimmen, und um unter Verwendung der Referenzinformationen und der bestimmten Änderung die Information bezüglich der Aberration (12) zu bestimmen.

9. Abbildungssystem (70) umfassend:

eine Vorrichtung (10; 59; 60) gemäß einem der vorangehenden Ansprüche;
eine Einstelleinrichtung (56), die ausgebildet ist, um die Projektionsoptik (16) unter Verwendung der Information bezüglich der Aberration (12) so einzustellen, dass ein Einfluss der Aberration (12) auf die Projektion auf den Bildsensor (14) gegenüber einem von der Vorrichtung erfassten Zustand reduziert ist; und
eine Steuereinrichtung (58) zum Steuern der optischen Einrichtung (22), so dass diese in einem ersten Zeitintervall angeordnet ist, um die optische Projektion auf den Bildsensor (14) so zu beeinflussen, dass auf den Bildsensor (14) das Mehrfachbild (24) entsteht; und so dass diese in einem zweiten Zeitintervall angeordnet ist, um die optische Projektion auf den Bildsensor (14) zumindest in einem gegenüber dem ersten Zeitintervall geringeren Umfang zu beeinflussen.

10. Abbildungssystem gemäß Anspruch 9, bei dem die Steuereinrichtung (58) ein Stellglied umfasst, das ausgebildet ist, um die optische Einrichtung (22) während des ersten Zeitintervalls in einem Strahlengang hin zu dem Bildsensor (14) zu positionieren, und das ausgebildet ist, um die optische Einrichtung (22) während des zweiten Zeitintervalls außerhalb des Strahlengangs zu positionieren.

11. Abbildungssystem gemäß Anspruch 9 oder 10, bei dem die Projektionsoptik (16) einen verformbaren Spiegel (16b) umfasst, der eine spiegelnde Oberfläche aufweist, die ausgebildet ist, um einen Strahlengang zwischen einem Objektbereich (18) und dem Bildsensor (14) umzulenken und um basierend auf einem Ansteuersignal (62) eine Oberflächenform der spiegelnden Oberfläche zu verändern;
wobei die Einstelleinrichtung (56) ausgebildet ist, um das Ansteuersignal (62) basierend auf der Information bezüglich der Aberration (12) bereitzustellen.

12. Abbildungssystem (80) umfassend:

eine Vorrichtung (10; 50; 60) gemäß einem der Ansprüche 1 bis 8, wobei der Bildsensor (14) ein erster Bildsensor (14) ist und wobei die Projektionsoptik (16) eine erste Projektionsoptik (16) ist;

einen zweiten Bildsensor (66);

eine zweite Projektionsoptik (64a, 64b) zur optischen Projektion auf den zweiten Bildsensor (66); und

eine Einstelleinrichtung (56), die ausgebildet ist, um die zweite Projektionsoptik (64a, 64b) unter Verwendung der Information bezüglich der Aberration (12) so einzustellen, dass ein Einfluss der Aberration (12) auf die Projektion auf den zweiten Bildsensor (66) gegenüber einem von der Vorrichtung erfassten Zustand reduziert ist.

13. Abbildungssystem gemäß Anspruch 12, umfassend ein strahlteilendes Element (68), das so angeordnet ist, dass das strahlteilende Element (68) einen Anteil (72a, 72b) eines Strahlengangs zwischen der ersten oder zweiten Projektionsoptik (16, 64a, 64b) und dem zweiten Bildsensor (66) auskoppelt, so dass die Projektion auf den ersten Bildsensor (14) und die Projektion auf den zweiten Bildsensor (66) denselben optischen Ursprung aufweisen.

14. Abbildungssystem gemäß Anspruch 12 oder 13, bei dem die erste oder zweite Projektionsoptik (16, 64a, 64b) einen verformbaren Spiegel (64a) umfasst, der eine spiegelnde Oberfläche aufweist, die ausgebildet ist, um einen Strahlengang zwischen einem Objektbereich (18) und dem zweiten Bildsensor (66) umzulenken und um basierend auf einem Ansteuersignal (62a) eine Oberflächenform der spiegelnden Oberfläche zu verändern;

wobei die Einstelleinrichtung (56) ausgebildet ist, um das Ansteuersignal (56) basierend auf der Information bezüglich der Aberration (12) bereitzustellen.

15. Verfahren (900) zum Messen einer Aberration (12) mit folgenden Schritten:

Bereitstellen eines Bildsensors (14);

Anordnen einer Projektionsoptik (16) zur optischen Projektion auf den Bildsensor (14);

Beeinflussen der optischen Projektion auf den Bildsensor (14) mit einer optischen Einrichtung (22) so, dass auf dem Bildsensor (14) ein Mehrfachbild (24) entsteht;

Bestimmen einer Information bezüglich der Aberration (12) auf Basis des Mehrfachbilds (24).

Fig. 1

Fig. 2a

EP 3 260 829 A1

Fig. 2b

Fig. 2c

Fig. 2d

Fig. 2e

76'

Fig. 2f

Fig. 3a

Fig. 3b

Fig. 3c

Fig. 3d

Fig. 4a

Fig. 4b

Fig. 4c

Fig. 4d

Fig. 5a

Fig. 5b

Fig. 5c

Fig. 5d

Fig. 5e

Fig. 5f

Fig. 5g

Fig. 6

EP 3 260 829 A1

Fig. 7

Fig. 8

EP 3 260 829 A1

Fig. 9

900

| Bereitstellen eines Bildsensors | 910 |

| Anordnen einer Projektionsoptik zur optischen Projektion auf den Bildsensor | 920 |

| Beeinflussen der optischen Projektion auf den Bildsensor mit einer optischen Einrichtung so, dass auf dem Bildsensor ein Mehrfachbild entsteht | 930 |

| Bestimmen einer Information bezüglich der Aberration auf Basis des Mehrfachbilds | 940 |

Fig. 10

Europäisches
Patentamt

European
Patent Office

Office européen
des brevets

**EUROPÄISCHER RECHERCHENBERICHT**

Nummer der Anmeldung

EP 17 17 7531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 101 614 593 A (INST OPTICS & ELECT CN ACAD) 30. Dezember 2009 (2009-12-30) * Abbildungen 1,3 * ----- | 1-15 | INV. G01J9/00 |
| X | JIANXIN WANG ET AL: "Wavefront response matrix for closed-loop adaptive optics system based on non-modulation pyramid wavefront sensor", OPTICS COMMUNICATIONS, ELSEVIER, AMSTERDAM, NL, Bd. 285, Nr. 12, 14. Februar 2012 (2012-02-14), Seiten 2814-2820, XP028410659, ISSN: 0030-4018, DOI: 10.1016/J.OPTCOM.2012.02.026 [gefunden am 2012-02-18] * Abbildung 1 * ----- | 1-15 | |
| X | EP 1 204 893 A1 (QINETIQ LTD [GB]) 15. Mai 2002 (2002-05-15) * Absätze [0001], [0023], [0028]; Abbildungen 2-6 * ----- | 1-6 | |
| A | US 4 824 243 A (WHEELER BRYCE A [US] ET AL) 25. April 1989 (1989-04-25) * Abbildung 2 * ----- | 1-15 | RECHERCHIERTE SACHGEBIETE (IPC) G01J |

Der vorliegende Recherchenbericht wurde für alle Patentansprüche erstellt

| Recherchenort | Abschlußdatum der Recherche | Prüfer |
|---|---|---|
| München | 21. November 2017 | Besser, Veronika |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

.......................................................................................................

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 17 7531

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2017

| Im Recherchenbericht angeführtes Patentdokument | Datum der Veröffentlichung | Mitglied(er) der Patentfamilie | Datum der Veröffentlichung |
|---|---|---|---|
| CN 101614593 A | 30-12-2009 | KEINE | |
| EP 1204893 A1 | 15-05-2002 | AT 230123 T | 15-01-2003 |
| | | AU 6580400 A | 13-03-2001 |
| | | CA 2381943 A1 | 22-02-2001 |
| | | DE 60001073 D1 | 30-01-2003 |
| | | DE 60001073 T2 | 21-08-2003 |
| | | EP 1204893 A1 | 15-05-2002 |
| | | ES 2187482 T3 | 16-06-2003 |
| | | GB 2353392 A | 21-02-2001 |
| | | JP 2003529092 A | 30-09-2003 |
| | | WO 0113159 A1 | 22-02-2001 |
| US 4824243 A | 25-04-1989 | DE 3878402 T2 | 03-06-1993 |
| | | EP 0315663 A1 | 17-05-1989 |
| | | IL 86197 A | 18-08-1992 |
| | | JP H0670592 B2 | 07-09-1994 |
| | | JP H01503330 A | 09-11-1989 |
| | | US 4824243 A | 25-04-1989 |
| | | WO 8809488 A1 | 01-12-1988 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1983318 A1
- US 4696573 A
- US 8907260 B2
- US 7268937 B1
- US 7554672 B2
- WO 2009058747 A1
- WO 2004113856 A1
- US 8517535 B2
- US 7531774 B2